(19) Europäisches Patentamt / European Patent Office / Office européen des brevets

(11) **EP 4 063 280 B1**

(12) **EUROPEAN PATENT SPECIFICATION**

(45) Date of publication and mention of the grant of the patent:
**10.06.2026 Bulletin 2026/24**

(21) Application number: **21164354.9**

(22) Date of filing: **23.03.2021**

(51) International Patent Classification (IPC):
**B64G 1/10** (2006.01)  **B64G 1/64** (2006.01)
**B64G 1/22** (2006.01)  **B64G 99/00** (2009.01)

(52) Cooperative Patent Classification (CPC):
**B64G 1/105; B64G 1/1057; B64G 1/22;**
**B64G 99/00;** B64G 1/645

(54) **ELECTROSTATIC ACTUATION AND CONTROL OF GRAVITY REFERENCE SENSOR TEST MASSES**

ELEKTROSTATISCHE BETÄTIGUNG UND STEUERUNG VON SCHWERKRAFTREFERENZSENSORTESTMASSEN

ACTIONNEMENT ET CONTRÔLE ÉLECTROSTATIQUES DE MASSES D'ESSAI DE CAPTEUR DE RÉFÉRENCE DE GRAVITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.09.2022 Bulletin 2022/39**

(60) Divisional application:
**26171940.5 / 4 755 808**

(73) Proprietor: **Airbus Defence and Space GmbH**
**82024 Taufkirchen (DE)**

(72) Inventors:
• **Ziegler, Tobias**
**82024 Taufkirchen (DE)**
• **Brandt, Nico**
**82024 Taufkirchen (DE)**
• **Delchambre, Simon**
**82024 Taufkirchen (DE)**

(74) Representative: **LKGLOBAL Partnerschaftsgesellschaft mbB**
**Brienner Straße 11**
**80333 München (DE)**

(56) References cited:
• **MANCE DAVOR ET AL: "Development of Electronic System for Sensing and Actuation of Test Mass of the Inertial Sensor LISA", DEPARTMENT OF ELECTRONICS FACULTY OF ELECTRICAL ENGINEERING, MECHANICAL ENGINEERING AND NAVAL ARCHITECTURE (FESB), 29 May 2012 (2012-05-29), pages 1 - 184, XP093027163**
• **MONTEMURRO FABIO ET AL: "SLIDING MODE TECHNIQUE APPLIED TO TEST MASS SUSPENSION CONTROL", 5TH IFAC SYMPOSIUM ON MODELLING AND CONTROL IN BIOMEDICAL SYSTEMS 2003, MELBOURNE, AUSTRALIA, 21-23 AUGUST 2003, vol. 40, no. 7, 1 January 2007 (2007-01-01), pages 627 - 632, XP093027186, ISSN: 1474-6670, DOI: 10.3182/ 20070625-5-FR-2916.00107**
• **ESA, NASA: "Laser Interferometer Space Antenna (LISA) Mission Concept", 4 May 2009 (2009-05-04), pages 1 - 59, XP093060168, Retrieved from the Internet <URL:https://lisa. nasa.gov/archive2011/Documentation/ LISA-PRJ-RP-0001.pdf> [retrieved on 20230703]**
• **WANG YUKUN ET AL: "Adaptive preload controller design and analysis for electrostatic suspension system", INTERNATIONAL JOURNAL OF MODERN PHYSICS A, vol. 36, no. 11&12, 27 February 2021 (2021-02-27), SG, pages 1 - 14, XP093027192, ISSN: 0217-751X, DOI: 10.1142/S0217751X21400121**

EP 4 063 280 B1

- WANG SHAOXIN ET AL: "A Space Inertial Sensor Ground Evaluation System for Non-Sensitive Axis Based on Torsion Pendulum", APPLIED SCIENCES, vol. 10, no. 9, 29 April 2020 (2020-04-29), pages 1 - 16, XP093027200, DOI: 10.3390/app10093090
- BENCZE W J ET AL: "The Gravity Probe B electrostatic gyroscope suspension system (GSS)", CLASSICAL AND QUANTUM GRAVITY, INSTITUTE OF PHYSIC PUBLISHING, BRISTOL, GB, vol. 32, no. 22, 17 November 2015 (2015-11-17), pages 224005, XP020294034, ISSN: 0264-9381, [retrieved on 20151117], DOI: 10.1088/0264-9381/32/22/224005
- EGLINGTON MICHAEL LYLE ET AL: "Authority-on-demand: Adaptive suspension control for the Gravity Probe B gyroscopes", 31 August 2000 (2000-08-31), XP093341268, ISBN: 978-0-493-02977-1, Retrieved from the Internet <URL:https://www.researchgate.net/publication/234215420>
- JENNRICH O: "TOPICAL REVIEW; LISA technology and instrumentation", CLASSICAL AND QUANTUM GRAVITY, INSTITUTE OF PHYSIC PUBLISHING, BRISTOL, GB, vol. 26, no. 15, 7 August 2009 (2009-08-07), pages 153001, XP020159383, ISSN: 0264-9381
- SATELLITENSYSTEME DORNIER GMBH S ET AL: "LISA Study of the Laser Interferometer Space Antenna Final Technical Report", 1 April 2000 (2000-04-01), pages 1 - 504, XP055831324, Retrieved from the Internet <URL:https://lisa.nasa.gov/archive2011/Documentation/FTR.pdf> [retrieved on 20210810]
- ANTONUCCI F ET AL: "LISA Pathfinder data analysis;LISA Pathfinder data analysis", CLASSICAL AND QUANTUM GRAVITY, INSTITUTE OF PHYSIC PUBLISHING, BRISTOL, GB, vol. 28, no. 9, 19 April 2011 (2011-04-19), pages 94006, XP020189927, ISSN: 0264-9381, DOI: 10.1088/0264-9381/28/9/094006

**Description**

Technical Field

The description relates to system and methods for capturing and controlling a test mass with respect to an electrode housing, particularly for electrostatic actuation and control of gravity reference sensor test masses in spacecraft applications in outer space.

Technical Background

Recent breakthroughs in gravitational wave astronomy like the first direct detection of gravitational waves by the ground-based Laser Interferometer Gravitational-Wave Observatory (LIGO) detector network from a colliding binary black hole has quickly been followed by more observations of various sources, including a neutron-star collision which also could be traced by other means of astronomy. It turns out, that this so-called multi-messenger astronomy is extremely effective in answering fundamental questions from physics and astronomy. Earth-bound detectors are limited to frequencies above 10 Hz, as seismic disturbances are omnipresent. Most sources of gravitational waves are expected at frequencies between $10^{-4}$ Hz and 1 Hz, which is the measurement band addressed by space-based long-arm interferometers like the planned Laser Interferometer Space Antenna (LISA) space observatory.

The top-level LISA scientific requirements aim at realizing a space-based gravitational wave (GW) observatory on the basis of laser interferometric measurements between the interferometer endpoints. The interferometer can be synthesized from three linear independent interferometer arms with an arm length in the order of 2.5 million km. The endpoints of the interferometer arms are realized by free-flying test masses which are moving along their geodetics. Strain-related arm length variations between the test masses caused by GWs can be monitored via optical path length measurements in the interferometer.

Test masses are typically locked during the launch and transfer phase (e.g., the period after spacecraft separation from a launch vehicle up to the injection of the spacecraft into its intended science orbit) of a spacecraft to its final orbit so that the test masses do not damage any of the sensitive sensors within the spacecraft. The test masses are then released into free-flight when the spacecraft have reached their intended position in outer space. When the test masses are released, they may be applied with an impulse which results in a translational or rotational movement. In order to avoid damage of the sensors aboard the spacecraft, the test mass needs to be captured before a possible collision.

Jennrich, O.: "LISA technology and instrumentation", Classical and Quantum Gravity, Institute of Physic Publishing, Bristol, GB, vol. 26, no. 15, 7 August 2009, page 153001, describes the status of the technology and instrumentation for the joint ESA /NASA gravitational wave detector LISA. It describes the measurement principle and the mission architecture including the resulting sensitivity before focusing on a description of the main payload items, such as the interferometric measurement system, comprising the optical system with the optical bench and the telescope, the laser system and the phase measurement system, and the disturbance reduction system with the inertial sensor, the charge control system and the micro propulsion system.

Dornier Satellitensysteme GmbH et al.: "LISA Study of the Laser Interferometer Space Antenna - Final Technical Report", 1 April 2000, pages 1 to 504, describes the LISA Mission and provides an overview of mission objectives, mission and operation, and gives an introduction into the system design including payload aspects.

Montemurro Fabio et al: "Sliding Mode Technique appliedto Test Mass Suspension Control",5th IFAC Symposium on Modelling and Control in Biomedical Systems 2003, Melbourne, Australia, 21-23 August 2003, vol. 40, no. 7, 1 January 2007 (2007-01-01), pages 627-632, XP093027186, ISSN: 1474-6670, DOI: 10.3182/20070625-5-FR-2916.00107, discloses a Sliding Mode control design for a Test Mass suspension control problem applied to the LISA Pathfinder mission, comprising equipment modeling, actuation strategy description, controller law definition and design rules, stability and robustness analysis, performance results, and comparison with standard control design.

Wang Yukun et al: "Adaptive preload controller design and analysis for electrostatic suspension system", International Journal of Modern Physics A, vol. 36, no. 11&12, 27 February 2021 (2021-02-27), pages 1-14, XP093027192, SG ISSN: 0217-751X, DOI: 1 0.1142/50217751X21400121, discloses an adaptive controller with variable preload for an electrostatic suspension control system. The system model is linearized and the preload voltage are adaptively changed by the measured acceleration in real time.

Summary

With that being said, it may be seen as an object to provide a control system with increased reliability for effectively capturing a test mass after being released from a locking mechanism and bringing the test mass into a desired position and/or attitude with respect to the spacecraft that carries the test mass. This object is solved by the subject matter of the independent claims.

A control system for electrostatic capturing and controlling of a position and/or attitude of a test mass after release into free fall is provided. Embodiments can be derived from the dependent claims and from the following description.

Many of the features described with reference to the control system may be implemented as method steps, or vice versa. Therefore, the description provided in the context of the control system applies in an analogous manner also to a method for capturing a test mass within an electrode housing of a spacecraft with multiple actuation and sensing arrangements.

According to an aspect, a control system for electrostatic capturing and controlling of a position and/or an attitude of a test mass after release into free fall is provided. The control system comprises a locking mechanism for holding and releasing the test mass, multiple actuation and sensing arrangements, an electrode housing with a cavity, the cavity being configured for receiving the test mass, and a controller that is electrically connected to each of the actuation and sensing arrangements. The actuation and sensing arrangements are mounted to the electrode housing so that at least one actuation and sensing arrangement is arranged at each side of the cavity. The actuation and sensing arrangements are configured to detect a position and/or an attitude of the test mass in the cavity with respect to the electrode housing. The actuation and sensing arrangements are configured to apply an electrostatic force to the test mass in response to which the test mass changes its position and/or attitude with respect to the electrode housing. The controller comprises a control module and an actuation module. The controller is configured to receive a position and/or attitude value of the test mass with respect to the electrode housing. The control module is configured to determine the electrostatic force for being applied to the test mass based on the received position and/or attitude value and in consideration of a desired position and/or attitude of the test mass with respect to the electrode housing. and the actuation module is configured to generate a control command for driving the actuation and sensing arrangements with a control voltage based on the electrostatic force determined by the control module and the received position and/or attitude value. The control module and the actuation module are configured to use the received position and/or attitude value in a higher order electrostatic model of the test mass within the control system to determine the electrostatic force and the control voltage, respectively, to move the test mass into the desired position and/or attitude of the test mass with respect to the electrode housing. An inverse of the higher order electrostatic force/torque model is used to obtain the corresponding voltages.

Generally, the test mass is supposed to be located in the electrode housing without any contact to the electrode housing or any one of the actuation and sensing arrangements. The test mass can be used in a measurement arrangement in outer space. However, for certain measurements, the test mass must be in a so-called free-fall, i.e., move freely without any contact to a surrounding spacecraft. The control system described herein is used to bring the test mass into a desired position with regard to the electrode housing and the actuation and sensing arrangements. The desired position may be determined by the relative position of the test mass to the spacecraft and/or other test masses or bodies. For example, the measurement arrangement may comprise three spacecraft, each of which contains a test mass, with the test masses arranged at the corners of a triangle. The test masses are brought into a predetermined or desired position and attitude and the spacecraft containing the test mass is controlled so that the spacecraft moves with the test mass and there is no physical contact between the electrode housing and the actuation and sensing arrangements on one hand and the test mass on the other hand.

The actuation and sensing arrangement may include an actuation device and a sensing device. The actuation device is configured to apply a force, particularly by electrostatic means, onto the test mass and the sensing device is configured to sense a position of the test mass. The sensing device may sense the position of the test mass by sensing the distance to the test mass or one of its surfaces by electrostatic means. However, the actuation and sensing arrangement may comprise sensing devices that use other sensing principles for detecting the position of the test mass, like optic sensors or other sensors.

The controller generates the control command for the actuation and sensing arrangements based on the test mass position and/or attitude information received from the actuation and sensing arrangements and provides a control voltage to the actuation and sensing arrangements in correspondence with the control command. The actual position and/or attitude of the test mass are sensed and used for generating control commands and the corresponding voltage values for the actuation and sensing arrangements. Generating the control command for the actuation and sensing arrangements is done in two steps: in a first step, the control module determines the required electrostatic force in consideration of the actual position and/or attitude of the test mass and the desired position and/or attitude; in a second step, the control command for commanding the required control voltages is determined by the actuation module in consideration of the required electrostatic force and the actual position and/or attitude of the test mass. Therefore, the current position and/or attitude of the test mass are considered when determining the required electrostatic force and when determining the control command for the control voltage(s). The control module and the actuation module are both fed with the determined (current) position and/or attitude of the test mass and make use of this current position and/or attitude in a higher order electrostatic model of the test mass within the control system in order to exert forces onto the test mass for bringing it into the desired position and/or attitude. However, the higher order model is not only used to minimize control errors, but it is used in the control module and the actuation module to determine in a more accurate manner the required electrostatic forces and the control voltages in order to move the test mass into the desired position and/or attitude.

The actuation and sensing arrangements are driven by a voltage signal. The test mass is spaced apart from the actuation and sensing arrangements. Based on the relative position and attitude of the test mass with regard to the actuation and sensing arrangements, an electrostatic force and/or torque is applied by the actuation and sensing arrangements to the test mass in order to displace and/or rotate the test mass within the electrode housing to bring it into the desired position and/or attitude. The electrostatic force applied by the actuation and sensing arrangements onto the test mass exert forces that displace and/or rotate the test mass within the electrode housing. Multiple actuation and sensing arrangements may be placed opposite to each surface of the test mass so that a desired force and/or torque can be applied by the actuation and sensing arrangements to the test mass by selectively supplying the actuation and sensing arrangements with a supply voltage. For example, the supply voltage may vary for each actuation and sensing arrangement depending on the required force and/or torque for bringing the test mass into a desired position.

The actuation and sensing arrangements may particularly be used to stop an undesired movement and/or rotation of the test mass when the test mass is released from a locking mechanism which holds the test mass in place during start and travel phase of the spacecraft. Due to sensible measurement equipment, the test mass may be locked during start and travel phase to avoid damage of the measurement equipment. When the test mass is released from the locked position, it may get an impulse from the locking mechanism and may move. This movement needs to be stopped and the test mass brought into a desired position, e.g., in the center of the electrode housing with equal distance on each side of the test mass or any other required position or sweet spot for the scientific instrument to enable the science measurements or for instrument calibration purposes.

The actuation and sensing arrangements are also able to detect the distance between the test mass surfaces and the actuation and sensing arrangements located opposite to the respective test mass surfaces.

The position and/or attitude of the test mass may be acquired over time, so that the change of the position and/or attitude over time, i.e., the velocity of the test mass' movement, can be determined.

According to an embodiment, the control system further comprises a signal injection device. The signal injection device is configured to apply a signal to the test mass. The applied signal may be referred to as injection signal. The actuation and sensing arrangements are configured to detect the signal emanated by the test mass, generate a distance signal based on the detected signal, and transmit the distance signal to the controller, wherein the distance signal may be indicated by a capacitance value. The controller is configured to determine a distance between the test mass and the actuation and sensing arrangements on each side of the cavity based on the distance signal in order to determine the position and/or attitude of the test mass with respect to the electrode housing.

The signal injection device applies a voltage signal to the test mass. The test mass is preferably made of an electrically conductive material. The actuation and sensing arrangements receive a signal that is emanated by the test mass when the signal injection device injects the signal into the test mass.

For example, the signal injected into the test mass induces an electric current and/or voltage into the actuation and sensing arrangements. The induced electric current and/or voltage is a measure for the distance between the test mass and each actuation and sensing arrangement. The actual distance between the actuation and sensing arrangements and the test mass may be determined based on voltage and/or current values that are derived from a calibration process.

The controller determines the distance of the test mass with respect to the electrode housing and/or the actuation and sensing arrangements for generating the control commands. In particular, the control module and the actuation module do not use a zero order electrostatic model that is based on the assumption that the test mass is in the center of the cavity, but these modules use a higher order electrostatic model in order to determine the required electrostatic force and the control command / control voltage for exerting a force onto the test mass at its actual position. For a zero order model, the forces applied to the test mass might be inappropriate if the test mass is not in the center of the cavity, i.e., displaced from the center and closer to some actuation and sensing arrangements than to others.

The signal from the injection device and the signal for generating the electrostatic forces are provided such that they can be distinguished from each other.

It is noted that the signal injection device of this embodiment is particularly implemented when the sensing device detects the position of the test mass by using electrostatic means. However, for other types of sensors, the signal injection device may not be necessary.

According to another embodiment, the signal injection device comprises multiple injection electrodes that are arranged at least at two sides of the cavity.

In this embodiment, the signal is applied to the test mass in a wireless manner. The injection electrodes are spaced apart from the test mass and the signal induces an electric current and/or voltage into the test mass via the gaps between the injection electrodes and the test mass. The signal is injected into the test mass for sensing purposes, i.e., to detect the distance between the test mass and the actuation and sensing arrangements.

The injection electrodes may be arranged beside the actuation and sensing arrangements so that they face, together with the actuation and sensing arrangements, side surfaces of the test mass. In one embodiment, injection electrodes are arranged so that they face two pairs of opposing side surface of the test mass (e.g., first pair: at least one injection electrode facing the upper surface and at least one injection electrode facing the lower surface; second pair: at least one injection electrode facing the left surface and at least one injection electrode facing the right surface; a third pair of injection electrodes may be optionally placed so that at least one injection electrode faces the front surface and at least one injection electrode faces the back surface).

However, in an alternate embodiment, the signal may be supplied to the test mass via a wired connection. A thin wire may be connected to the test mass and the signal is supplied to the test mass via the thin wire.

According to another embodiment, a force/torque-pair along a spatial axis and about a spatial axis is applied by at least three actuation and sensing arrangements.

Multiple actuation and sensing arrangements, that may be referred to as electrodes, may be included in the control system. However, for applying a certain force along the x-axis and/or torque about the z-axis, it may be sufficient when three of these electrodes are used. These three electrodes may be selectively activated in order to apply a desired force and/or torque to the test mass. At least three other electrodes are used for applying a force along the y-axis and/or torque about the x-axis, and additional at least three electrodes are used for applying a force along the z-axis and/or torque about the y-axis.

According to another embodiment, the controller is configured to generate a control command which causes the electrodes to concurrently exert a force onto the test mass along at least one spatial axis and a torque about at least one spatial axis.

The control system as described herein generates force and torque at the same time so that the test mass is moved and rotated at the same time. Therefore, lateral displacement and rotational movement at the same time are commanded by the controller. Particularly, there is no specific duty cycle with a sequential order of applying force and torque to the test mass.

According to another embodiment, the controller is configured to dynamically apportion force and/or torque applied to the test mass.

The amount of force and torque commanded by the controller can be dynamically allocated. Particularly, the dynamic allocation of the amount of force and torque to the test mass can be done by considering the position and/or attitude of the test mass and/or the change of the position and/or attitude of the test mass over time.

According to another embodiment, the control module is configured to generate the control command for driving the actuation and sensing arrangements with a control voltage based on a set of polynomials or based on a look-up table.

The look-up table may be populated with values like current displacement of the test mass and voltage values for each actuation and sensing arrangement for handling the respective displacement of the test mass, i.e., for stopping movement of the test mass and bringing the test mass into the desired position (centralized in the cavity of the electrode housing). Each displacement of the test mass may be assigned with a control voltage for each actuation and sensing arrangement. The set of polynomials and the look-up table are descriptive for the higher order electrostatic model that is used by the control module and the actuation module.

According to another embodiment, the controller is configured to determine capacitance values and capacitance gradients of a capacitance between the actuation and sensing arrangements and the test mass for generating the control command for driving the actuation and sensing arrangements with a control voltage at the current position and attitude of the test mass.

According to another aspect, a spacecraft is provided that comprises a control system as described herein, and a test mass. The test mass is located in the cavity of the electrode housing with the locking mechanism holding the test mass in position.

This aspect describes a spacecraft with the test mass in proper position for the start and transport phase of the spacecraft. The test mass is locked, i.e., held in position within the cavity. Once the spacecraft reaches the intended position in outer space and the measurement can be started, the test mass is released into free fall. During this release process, the test mass may receive an impulse from mechanical parts of the locking mechanism. In order to avoid any damage from the resulting movement of the test mass, the actuation and sensing arrangements capture the test mass and bring it into its intended position within the electrode housing.

According to another aspect, a method for capturing a test mass within an electrode housing of a spacecraft with multiple actuation and sensing arrangements is provided. The method comprises the steps: determining a position and/or attitude of the test mass with respect to the actuation and sensing arrangements; determining a required electrostatic force for being applied to the test mass based on the position and/or attitude of the test mass and in consideration of a desired position and/or attitude of the test mass with respect to the electrode housing; determining, for each actuation and sensing arrangement a control command for driving the actuation and sensing arrangement with a control voltage for moving the test mass into the desired position and/or attitude between the actuation and sensing arrangements by electrostatic forces generated by the actuation and sensing arrangements; wherein the control command for moving the test mass with the control voltage into the desired position and/or attitude is determined based on the required electrostatic force and the determined position and/or attitude of the test mass between the actuation and sensing arrangements; applying the control voltage to each actuation and sensing arrangement. The method further comprises the step of using the position and/or attitude of the test mass in a higher order electrostatic model of the test mass to determine the electrostatic force and the control voltage to move the test mass into the desired position and/or attitude of the test mass with respect to the electrode housing. An inverse of the higher order electrostatic force/torque model is used to obtain the corresponding voltages.

The steps of the method correspond to the functions of the control system or its components as described herein. The details of the individual functions are not repeated here. Reference is made to the detailed description of the control system. However, it is to be understood that the embodiments of the control systems may also relate to method steps.

According to an embodiment, the method further comprises applying a signal to the test mass; detecting a signal emanated by the test mass; generating a distance signal based on the detected signal; and determining a distance between the test mass and the actuation and sensing arrangements on each side of the cavity based on the distance signal in order to determine the position and/or attitude of the test mass with respect to the electrode housing.

According to an embodiment, the method further comprises applying a force/torque-pair along a spatial axis and about a spatial axis by at least three actuation and sensing arrangements (electrodes) that are selectively activated in view of the particular force and/or torque to be applied to the test mass. According to an embodiment, the method further comprises generating a control command which causes the electrodes to concurrently exert a force onto the test mass along at least one spatial axis and a torque about at least one spatial axis.

According to an embodiment, the method further comprises dynamically apportioning force and torque applied to the test mass.

According to an embodiment, the method further comprises generating the control command for driving the actuation and sensing arrangements with a control voltage based on a set of polynomials or based on a look-up table.

Brief description of the drawings

The subject matter will hereinafter be described in conjunction with the following drawing figures, wherein like numerals denote like elements, and wherein:

Fig. 1 is a schematic representation of a part of a control system in accordance with an embodiment;
Fig. 2 is a schematic representation of a part of an electronic housing of a control system;
Fig. 3 is a schematic representation of the capacitances between the actuation and sensing arrangements, the electronic housing, and the test mass;
Fig. 4 is a schematic representation of electrostatic forces over the distance between actuation and sensing arrangements (e.g., electrodes) and the test mass;
Fig. 5 is a schematic representation of a force-torque-diagram;
Fig. 6 is a schematic representation of a closed-loop control scheme of a controller of the control system;
Fig. 7 is a schematic representation of electrodes and a test mass;
Fig. 8 is a schematic representation of a higher order model used to determine the available forces as a function of the test mass displacement within the electrode housing;
Fig. 9 is a schematic representation of a spacecraft with a control system;
Fig. 10 is a schematic representation of the steps of a method for capturing and controlling a test mass within an electrode housing.

Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

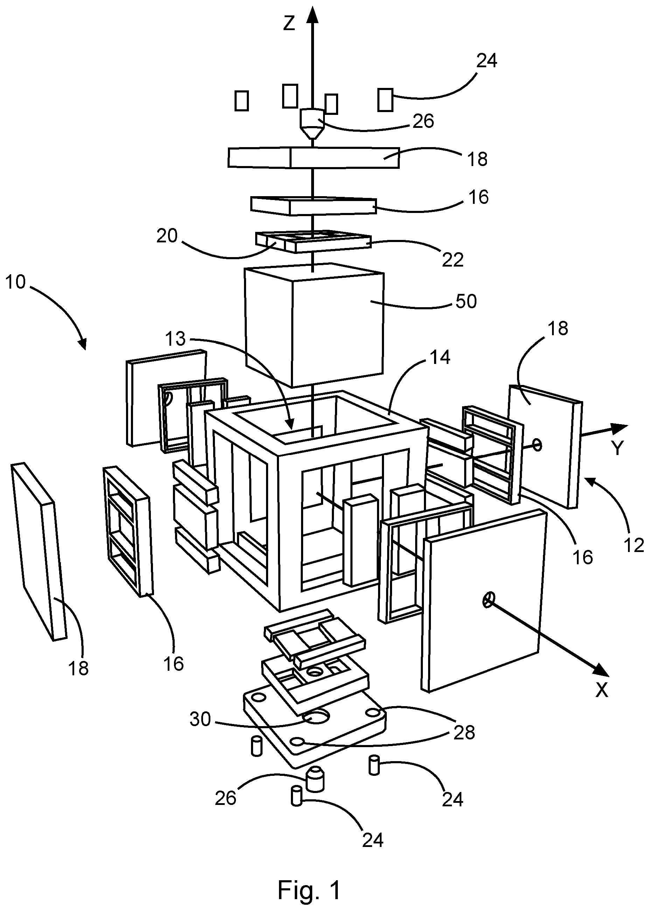

Fig. 1 shows a part of a control system 10 that is configured to capture and control the test mass 50 within the cavity 13 of the electrode housing 12. During start and transport phase of a spacecraft including the control system 10 and the test mass 50, the test mass 50 is locked and held in its position by the caging mechanism 24 (e.g., four caging fingers, respectively, on two opposite side surfaces of the test mass, in the example of Fig. 1 the upper and lower side of the test mass) and the locking mechanism 26 (e.g., two plunges on opposite sides of the test mass which apply a force to hold the test mass). When the test mass 50 is about to be released, the caging mechanism 24 is released by retracting the caging fingers from the test mass. In a subsequent step, the plungers of the locking mechanisms 26 are retracted. During this subsequent step, the test mass may get an impulse and move within the cavity 13. In order to capture the test mass 50 and bring it into its intended position within the cavity 13 of the electrode housing 12, the actuation and sensing arrangements 22, that are located so that they face each side surface (all six surfaces) of the test mass, are supplied with a control voltage so that electrostatic forces act onto the test mass, stop its unintended movement (translational or rotational movement) and bring it into the predetermined or desired position.

Fig. 1 further shows injection electrodes which are used as a signal injection device 20. The injection electrodes are located facing the upper, lower, left, and right side of the test mass 50 and are held by the electrode housing. The actuation and sensing arrangements (e.g., electrodes) 22 are also mounted to the electrode housing 12. The electrode housing 12 comprises a housing structure 14 with the cavity 13 in its center, and an electrode frame 16 which holds or supports the electrodes 20, 22. A cover 18 covers the electrodes 20, 22 when these are mounted to the electrode frame 16.

The caging fingers of the caging mechanism 24 and the plungers of the locking mechanism 26 act onto the test mass through openings 28, 30, respectively. The test mass 50 may have a cuboid shape and a mass of about 2 kg. However, these values are by way of example only and not intended to limit the applicability of the principles described herein. The test mass may comprise a gold-titanium alloy. However, other materials may be chosen for the test mass.

The electrodes 22 are arranged at the electrode frame 16 so that displacements of the test mass 50 along any of the axes x, y, z and rotational movements along these axes can be caused when the electrodes 22 are supplied with a control voltage.

Free-flying test masses (TM) are the central component of high-precision Gravitational Reference Sensors (GRS) as will be used in space-based gravitational wave observatories like LISA. A total of six GRSHs will be used in the three LISA spacecraft (two GRSHs per spacecraft). In order to enable free-flying test masses 50 to be used as interferometer endpoints, the test masses 50 must be released from their launch lock devices 24, 26 into free flight, i.e., into a state where they have no mechanical contact to the surrounding electrode housing structure 12. The release of test masses 50 into free flight is a critical moment because high release velocities and test mass displacements resulting from imperfections in the release mechanism and associated physical phenomena can cause damage to the GRSH and thus compromise mission success. Therefore, the test mass release is a crucial mission phase.

The main elements of the GRSH relevant for test mass release into free flight are the centimeter-sized test mass itself, the structure of the electrode housing, the different types of electrodes for electrostatic sensing and actuation, the eight caging fingers of the caging mechanism 24 (holding the test mass 50 at the corners along the +z and -z direction) and the two plungers of the locking mechanism 26 (holding the TM in the center along the +z and -z direction, after the eight caging fingers have been retracted). in one non-limiting example, the distance between the test mass 50 in centered position and the adjacent electrodes 20, 22 is between approx. 3 and 4 millimeters, depending on the coordinate axis. Releasing a test mass 50 from the plungers into free-flight, subsequent capturing and transitioning into a stable closed-loop controlled reference state inside the electrode housing can be done by measuring the test mass displacements and applying corrective electrostatic forces and torques by commanding voltages to specific actuation and sensing arrangements 22.

The present description proposes an alternative approach to increase the electrostatic forces and torques with given voltage amplitudes at the actuation and sensing arrangements (the latter being a constraint from given hardware limits in GRS front-end electronics technology) and avoids linear Force-to-Voltage conversion errors, as they occur in existing methods, which can become very large with increasing test mass displacements and force commands. Thus, tolerable test mass release velocities are increased to allow autonomously capturing of a test mass without collisions to avoid damages and degradation or loss of the mission. Moreover, requirements on test mass release mechanisms in terms of acceptable release velocities and initial displacements can be relaxed such that ground testing becomes easier, less expensive, and more reliable in transferring on-ground verification results to the actual flight situation.

However, the control system as described herein uses the actual position and attitude information of the test mass 50 with respect to the electrode housing 12 instead of assuming that the test mass is in nominal, centered position and using a zero-order capacitance model (i.e., no test mass state information is used by the actuation algorithm). The voltages for commanding the actuation and sensing arrangements are determined based on the actual position and attitude of the test mass 50 and are applied to the actuation and sensing arrangements. However, instead of applying the voltages to the actuation and sensing arrangements in a time-separated manner in order to realize both the forces and torques within the command rate of the closed-loop control system, the approach described herein, in certain embodiments, commands force and torque concurrently. It was recognized and appreciated that the true forces and torques applied to the test mass by the actuation and sensing arrangements 22 do depend on the current test mass position and/or attitude.

For analytically describing the physical interaction of the test mass, the electrodes, and the electrode housing, an electrostatic force/torque model is used. This force/torque model describes the forces and torques acting on the test mass as a function of the voltages applied to the actuation electrodes 22, the test mass displacement-dependent capacitances and their gradients between test mass 50, electrodes 22, and electrode housing 12, as well as on the test mass charge. The model is used in both the controller and the actuation algorithms. The controller 40 uses this model to determine the available forces and torques to provide a command which does not violate the available forces and torque authority. The actuation algorithm uses this model to determine the voltages required to realize the commanded forces and torques. It shall be remarked that an inverse of the electrostatic force/torque model is used to obtain the according voltages.

In one example, the test mass vector is defined as follows:

$$\boldsymbol{x} = \{x \quad y \quad z \quad \theta \quad \eta \quad \phi\}^T \tag{1}$$

The according forces and torques are defined as:

$$\boldsymbol{F} = \{F_x \quad F_y \quad F_z \quad T_\theta \quad T_\eta \quad T_\phi\}^T \tag{2}$$

The electrode vector is defined as:

$$\boldsymbol{V} = \{V_1 \quad V_2 \quad ... \quad V_{17} \quad V_{18}\}^T \tag{3}$$

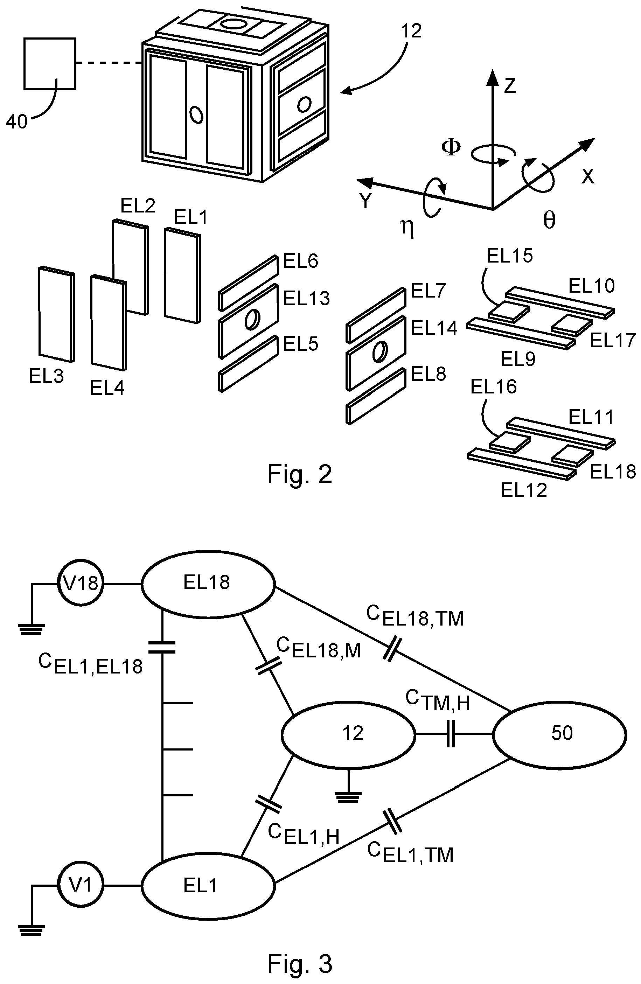

where the 18 electrodes are numbered as shown in Fig. 2.

Fig. 2 shows the electrode housing 12 of Fig. 1, wherein a controller 40 is connected to the electrodes 22 so that a control voltage can be supplied to the electrodes 22 for acting on the test mass to cause a displacement of the test mass along one or more of the axes x, y, z and/or a rotation about these axes.

Actuating and sensing electrodes EL1 to EL4 are arranged on first and second opposite sides of the test mass 50 at the electrode frame of the electrode housing. Actuation and sensing arrangements EL5 to EL8 and injection electrodes EL13 and EL14 are arranged on third and fourth opposite sides of the test mass 50. Actuation and sensing arrangements EL9 to EL12 and injection electrodes EL15 to EL 18 are arranged on fifth and sixth opposite sides of the test mass 50.

Generally, forces and torques $F_q$ along a single test mass coordinate q can be related to the test mass state and electrodes:

$$F_q = \frac{1}{2}\sum_{i=1}^{18}\frac{\partial C_{EL_i,TM}}{\partial q}(V_i - V_{TM})^2 + \frac{1}{2}\sum_{i=1}^{18}\frac{\partial C_{EL_i,H}}{\partial q}V_i^2 + \frac{1}{2}\frac{\partial C_{TM,H}}{\partial q}V_{TM}^2 \tag{4}$$

where $C_{EL_i,TM}$ is the i$^{th}$ electrode-to-test-mass capacitance, $C_{EL_i,H}$ the i$^{th}$ electrode-to-housing capacitance, $C_{TM,H}$ the test mass to housing capacitance, $V_i$ the voltage of electrode i, and $V_{TM}$ the test mass potential given by:

$$V_{TM} = \sum_{j=1}^{18}\frac{C_{EL_j,TM}V_j}{C_{tot}} + \frac{Q_{TM}}{C_{tot}}, \tag{5}$$

where the test mass total capacitance $C_{tot}$ is given by:

$$C_{tot} = C_{TM,H} + \sum_{k=1}^{18} C_{EL_k,TM}V_j \tag{6}$$

The non-linear force equation Eq (4) is derived from energy conservation laws of the electrostatic field of conductors surrounding the test mass. All capacitances and their gradients depend on the test mass position and attitude.

Fig. 3 gives a schematic overview of the conductors and capacitances of the electrode housing, the electrodes, and the test mass.

The electrode-to-test mass and electrode-to-housing capacitances can be approximated by a Taylor series expansion. As an example, a first order model is illustrated here:

$$C_{ELi,TM} = C_{ELi,TM,0} \pm \frac{\partial C_{ELi,TM}}{\partial x}\cdot x \pm \frac{\partial C_{ELi,TM}}{\partial \phi}\cdot \phi \tag{7}$$

$$C_{ELi,H} = C_{ELi,H,0} \pm \frac{\partial C_{ELi,H}}{\partial x}\cdot x \pm \frac{\partial C_{ELi,H}}{\partial \phi}\cdot \phi \tag{8}$$

The gradients of these first order models are:

$$\frac{\partial C_{ELi,TM}}{\partial x} \qquad (9)$$

$$\frac{\partial C_{ELi,H}}{\partial x} \qquad (10)$$

If only the four capacitances of one force/torque couple are considered (EL1-EL4, EL5-EL8, EL9-EL12), they do not differ in the coefficient's absolute values but only in the coefficient signs. Further, only the sum of electrode to housing and electrode to TM capacitance is used. The expressions will be used without the indices (i) and reduced to the zeroth order capacitance gradient model:

$$\frac{\partial C}{\partial x} = \frac{\partial C_{El,TM}}{\partial x} + \frac{\partial C_{El,H}}{\partial x} = \pm \frac{\partial C}{\partial x} \qquad (11)$$

The derivation of an actuation algorithm can be formalized as finding the inverse of non-linear force equation (Eq. (4)) in order to obtain a force-to-voltage (short F-to-V) conversion:

$$\boldsymbol{V} = A(\boldsymbol{x}, \boldsymbol{F}, Q_{TM}) \qquad (12)$$

The solution of this equation provides the voltages for the 18 electrodes in order to realize the commanded forces and torques derived by the closed-loop control algorithm.

However, to appreciate the approach disclosed herein, a set of assumptions is described that are taken in in the prior art to determine control voltages for the actuation and sensing arrangements. These assumptions are taken because the force/torque system of equations (Eq. (4)) is underdetermined (18 unknowns and 6 equations), and the assumptions are required to obtain set of equations that can be solved:

(1) The injection electrodes are not used for electrostatic actuation purposes, i.e., $V_i = 0$ for i = 13...18.
(2) The test mass charge $Q_{TM}$ is assumed to be negligible, i.e., $Q_{TM} = 0$. Consequently, also $C_{TM,H}$ is assumed to be negligible.
(3) With the assumption of neglecting the test mass charge ($Q_{TM} = 0$), the electrode voltages have to be chosen such that they fulfil the chosen test mass potential as in Eq. (5). The test mass potential can either be constant or changing over time. To simplify the equation, the test mass potential has been set to 0.
(4) The force or torque along each of the six coordinates is determined only by the electrode-TM capacitances $C_{ELi,TM}$ and electrode-housing capacitances $C_{ELi,H}$ and their respective gradients that have a first order dependence on that coordinate. This assumption leads to 3 force/torque equation systems for specific couples of test mass coordinates $(x/\Phi, y/\theta, z/\eta)$, where each equation system depends only on a set of four electrode voltages. From this assumption, it follows that the force/torque actuation along each pair only depend on four electrodes: EL1 to EL4 for $x/\Phi$, EL5 to EL8 for $y/\theta$, and EL9 to EL12 for $z/\eta$.
(5) The capacitance gradients use a zero-order model. This assumption means that no test mass position and/or attitude observations are used by the actuation algorithm.
(6) The coupled degrees of freedom are not actuated together, i.e., the forces and torques are alternately commanded in time, which means that a 50% duty cycle is used in order to sequentially perform the force and torque actuation cycles.
(7) The stiffness is assumed to be minimized.

By using these assumptions 1 to 7, the problem of inverting the non-linear force equation (4) is reduced to a solvable set of equations where each test mass coordinate couple $(x/\Phi, y/\theta, z/\eta)$ is actuated by only four actuation electrodes.

As an example, the resulting expressions for the $x/\Phi$ -couple (actuated by electrodes i =1...4) is shown below:

Force actuation cycle (equations to solve)     Torque actuation cycle (equations to solve)

$$\begin{cases} \sum_{i=1}^{4} a_i V_i^2 = F_x \\ \sum_{i=1}^{4} b_i V_i^2 = 0 \\ \sum_{i=1}^{4} c_i V_i = 0 \\ \sum_{i=1}^{4} d_i V_i^2 = -\min\left(|K_{xx}|\right) \end{cases} \qquad \begin{cases} \sum_{i=1}^{4} a_i V_i^2 = 0 \\ \sum_{i=1}^{4} b_i V_i^2 = T_\phi \\ \sum_{i=1}^{4} c_i V_i = 0 \\ \sum_{i=1}^{4} d_i V_i^2 = -\min\left(|K_{xx}|\right) \end{cases} \qquad (13)$$

In the equations above the coefficients

$$a_i = \left.\frac{\partial C_{Eli,TM}}{\partial x}\right|_{x=0} + \left.\frac{\partial C_{Eli,H}}{\partial x}\right|_{x=0} \qquad (14)$$

$$b_i = \left.\frac{\partial C_{Eli,TM}}{\partial \phi}\right|_{x=0} + \left.\frac{\partial C_{Eli,H}}{\partial \phi}\right|_{x=0} \qquad (15)$$

$$c_i = C_{Eli,H} \qquad (16)$$

$$d_i = \left.\frac{\partial^2 C_{Eli,TM}}{\partial x^2}\right|_{x=0} + \left.\frac{\partial^2 C_{Eli,H}}{\partial x^2}\right|_{x=0} \qquad (17)$$

are constant which results from the evaluation of the capacitance gradients expressions at the test mass in nominal position (derived from a 1st order capacitance model).

The resulting expressions for the state of the art actuation algorithm converting the commanded forces and torques along x and Φ into actuation voltages for the electrodes 1, 2, 3, and 4 are summarized in Table 1. The expressions for the y/θ and z/η-couples are similar.

Table 1

| Force actuation cycle (voltage solutions) | Torque actuation cycle (voltage solutions) |
|---|---|
| if $F_x \geq 0$. | if $T_\varphi \geq 0$. |
| $V_1 = V_x$, $V_2 = -V_x$, | $V_1 = V_\varphi$, $V_2 = 0$ |
| $V_2 = 0$, $V_4 = 0$ | $V_2 = -V_\varphi$, $V_4 = 0$ |
| where $V_x =$ | where $V_\varphi =$ |
| $\sqrt{\dfrac{F_x}{\left\|\frac{\partial C_{Elx,TM}}{\partial x}\right\| - \left\|\frac{\partial C_{Elx,H}}{\partial x}\right\|}}$ | $\sqrt{\dfrac{T_\varphi}{\left\|\frac{\partial C_{Elx,TM}}{\partial \varphi}\right\| - \left\|\frac{\partial C_{Elx,H}}{\partial \varphi}\right\|}}$ |
| if $F_x < 0$, | if $T_\varphi < 0$, |
| $V_1 = 0$, $V_2 = 0$, | $V_1 = 0$, $V_2 = V_\varphi$ |
| $V_2 = V_x$, $V_4 = -V_x$ | $V_2 = 0$, $V_4 = -V_\varphi$ |

(continued)

| Force actuation cycle (voltage solutions) | Torque actuation cycle (voltage solutions) |
|---|---|
| where $V_x =$ | where $V_\varphi =$ |
| $\sqrt{\dfrac{-F_x}{\left\|\dfrac{\partial C_{Elx,TM}}{\partial x}\right\| - \left\|\dfrac{\partial C_{Elx,H}}{\partial x}\right\|}}$ | $\sqrt{\dfrac{-T_\varphi}{\left\|\dfrac{\partial C_{Elx,TM}}{\partial \varphi}\right\| - \left\|\dfrac{\partial C_{Elx,H}}{\partial \varphi}\right\|}}$ |

These assumptions that are described in the context of equation 12 allow an approximation of the control voltages as described with regard to Eq 13 to 17 and Table 1. The control system 10 and the method disclosed herein, however, use a higher order capacitance model and the actual position of the test mass in order to determine the control voltages for the actuation and sensing arrangements 22.

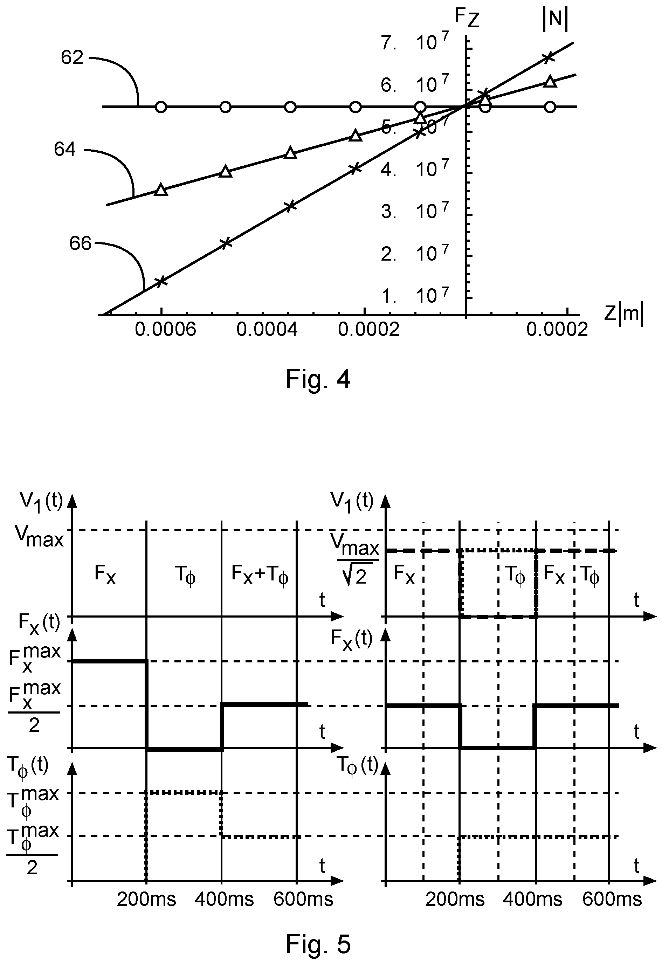

Fig. 4 schematically shows the dependency of the force acting on the test mass from the test mass displacement. Particularly, Fig. 4 shows the force $F_z$ along z versus a test mass displacement along z. For negative test mass displacements, the maximum positive force is indicated by line 62 which has been calculated by assuming zero test mass displacement. The curve 64 is obtained when the maximum positive force along z is commanded. The force amplitude decreases with negative test mass displacement. The influence from cross-axes actuation is indicated by the curve 66, where it is assumed that in addition to the maximum force command along z also the maximum torque along η is commanded at the same time.

Based on Fig. 4, it can be seen that the available actuation authority for each test mass degree of freedom changes depending on the test mass state $q$, the force/torque commands $F_{cmd}$ and the TM charge $Q_{TM}$. For a typical control situation where a displaced test mass has to be controlled back to zero, large test mass displacements cause the electrostatic actuation authority to become smaller and the error of the actuation algorithm to increase. The realized control forces and torques can therefore be written as:

$$F(q) = b(q, F_{cmd}, Q_{TM}) \cdot F_{q,cmd} \qquad (18)$$

where b is the so called actuation gain relating the commanded and the achieved electrostatic forces and torques $F(q)$ acting on the test mass. The nominal actuation gain (b = 1) is only obtained when the test mass displacement is zero and no charge is present on the test mass. After release from the plungers of the locking mechanism 26, the test mass state and hence the actuation gain is not exactly known. It is however of known sign and it is bounded by a known function. The sliding mode control method of the prior art was therefore used as a systematic approach to the problem of maintaining stability and consistent performance in the presence of actuation gain uncertainty. For designing the sliding mode controller, upper and lower bounds of the actuation gains are needed. The minimum bounds $b_{min}$ are obtained by assessing the maximum test mass displacements from the predicted trajectories (using the nonlinear electrostatic force/torque model) taking also actuation cross-couplings into account. The maximum actuation gains $b_{max}$ are expected when the test mass and the actuation forces/torques act in the same direction as the displacement. This may happen at start of control when the velocity and the initial displacement of a test mass degree of freedom have opposite sign. The state of the art discontinuous part of the control law can be written as:

$$u_{q,N} = -u_{0,q} \cdot sgn(s) \qquad (19)$$

The constant gain $u_{0,a}$ depends on both the minimum and maximum bounds of the actuation gains $b_{min}$ and $b_{max}$ and is chosen conservatively low to prevent commanding higher forces and torques than actually available.

In contrast to the prior art, the approach of this description has certain advantages:

(1) it results in lower force and torque errors, especially for larger test mass displacements and rotations which mainly occur during the test mass release operations;
(2) increased control authority when decelerating initial test mass release velocities and returning the test mass to its nominal position;
(3) apportioning the forces and torques for one test mass coordinate couple in a flexible way as there is no fix duty cycle of force and torque;
(4) negligible constraints on peak voltages and RMS voltage levels, imposed by cable capacitance requirements and applicable derating standards for flight hardware;
(5) handling higher release velocities when the test mass is released from the locking mechanism.

These advantages are achieved by the fact that the control system 10 described herein considers the actual position and/or attitude of the test mass for determining the control voltages for the actuation and sensing arrangements 22 and by implementing a higher order capacitance model by exploiting the available test mass position and/or attitude information, and by using adequate force/torque models, e.g., force/torque polynomials. Furthermore, the commanded forces and torques are correctly calculated by avoiding conservative assumptions. This is achieved by simultaneous force and torque commanding where the magnitude of both can be altered in a flexible way by appropriate apportionment of the voltages which lead to an improvement of the force or torque RMS levels up to a factor of two.

Fig. 5 compares the simultaneous actuation scheme (left, as proposed by the approach described herein) and an alternating "force/torque duty-cycle" actuation scheme (right). For the illustrated case, one duty cycle lasts 200 ms which is divided in two sub-cycles of 100 ms where first forces (first sub-cycle) and then torques (second sub-cycle) are commanded. Three commanding cases are shown: forces only (0-200 ms), torques only (200-400 ms), both, forces and torque of equal amplitude (400-600 ms). The first row shows the instantaneous voltages, the second row the RMS force levels, and the third row the RMS torques (both forces and torques are averaged over 200 ms). The increase by a factor of two in the realized forces and torques for the simultaneous actuation scheme (left) with respect to the alternating actuation scheme (right) appears when only forces or torques are commanded.

Furthermore, the forces and torques for each TM coordinate couple can be apportioned in a flexible way. The solution of the underdetermined force/torque system of equations is obtained by using appropriate assumptions to enable simultaneous force and torque commanding (which in turn allows flexible allocation of the available voltages to realize the commanded force and torques for the test mass coordinate couple determined by a set of four electrodes, and by using a higher order capacitance (and therefore also capacitance gradient) model. Not only the force-to-voltage conversion (done by the actuation algorithm) but also the force and torque commands calculated by the controller algorithm controller make use of the physically correct electrostatic forces and torques. This is achieved by using, for example, force/torque polynomials or look-up tables (derived from the electrostatic force/torque model), enabling the realization of an optimal control law. The polynomials provide the available forces and torques along all degrees of freedom in function of the apportioned voltages and the six coordinates.

The approach described herein increases the available electrostatic forces and torques while decreasing the force and torque errors. This enables accepting more initial test mass velocity after release from the release mechanism and enables the implementation of a more robust control system which also reduces the transient dynamics (and therefore increases system availability for science operations). These advantages are achieved without increasing the voltage amplitudes and/or changing electronic components in the flight hardware (which avoids the cost of additional hardware developments and qualification and deviating from flight-proven hardware components).

By accepting higher release velocities, the approach described herein relaxes the requirements on test mass release mechanisms in terms of acceptable release velocities and initial displacements. This will ease the ground verification and in particular the robustness in transferring the verification results from not fully representative ground testing to the real (full degree of freedom, full-DoF) flight situation. Some state of the art ground testing methods use a simplified test bench representing individual aspects of the release, for example realized by a single DoF measurement using a gravity compensated pendulum setup. Such a test setup does not represent the entire release mechanism (and process) in its integrated state on the spacecraft. For example, the ground testing of the release conditions does not include the real test mass and the real interface to the release plungers. Moreover, the test setup does not cover imperfections of the flight mechanism (e.g., lateral push of the plunger, adhesion effects and delay asymmetry when retracting both plungers). Being able to cope with larger in-flight release conditions allows accepting uncertainties that cannot be resolved from ground testing.

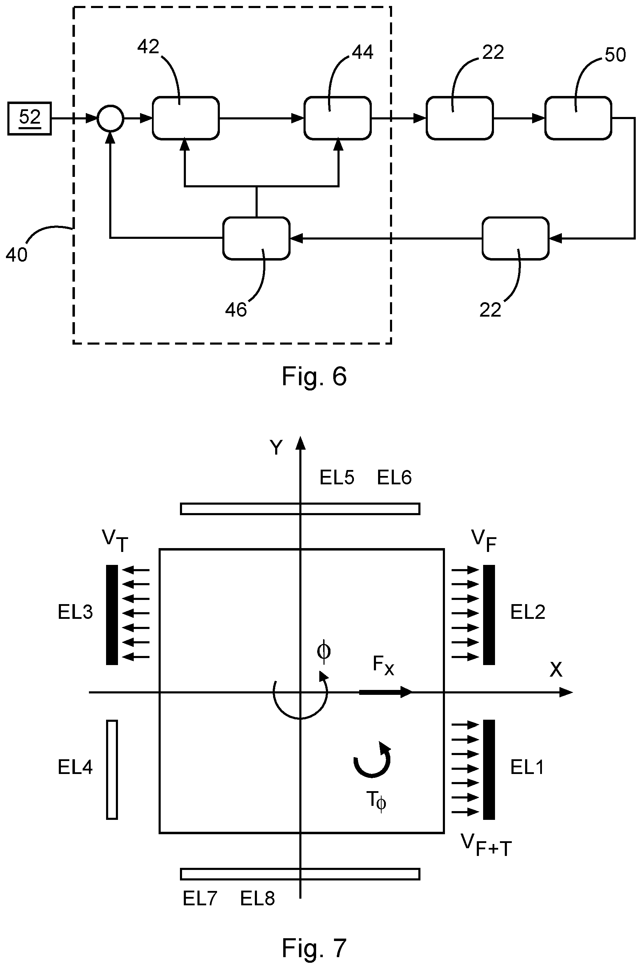

Fig. 6 shows a reference architecture of a closed-loop control system that implements the method steps and the functions of the control system described herein. The control system of Fig. 6 is configured for electrostatic capturing and control of the test mass after release from the caging mechanism 24 and the locking mechanism 26.

The architecture of Fig. 6 shows a test mass state reference 52, a control module 42, an actuation module 44, and a test mass observation module 46. The controller 40 implements the control module 42, the actuation module 44, and the test mass observation module 46 as well as the functions of these modules. The actuation module 44 supplies a voltage to the actuation and sensing arrangement 22 which applies force and/or torque to the test mass 50. Furthermore, the actuation and sensing arrangements 22 sense the position and/or attitude of the test mass 50 and provide the position and/or attitude values to the test mass observation module 46.

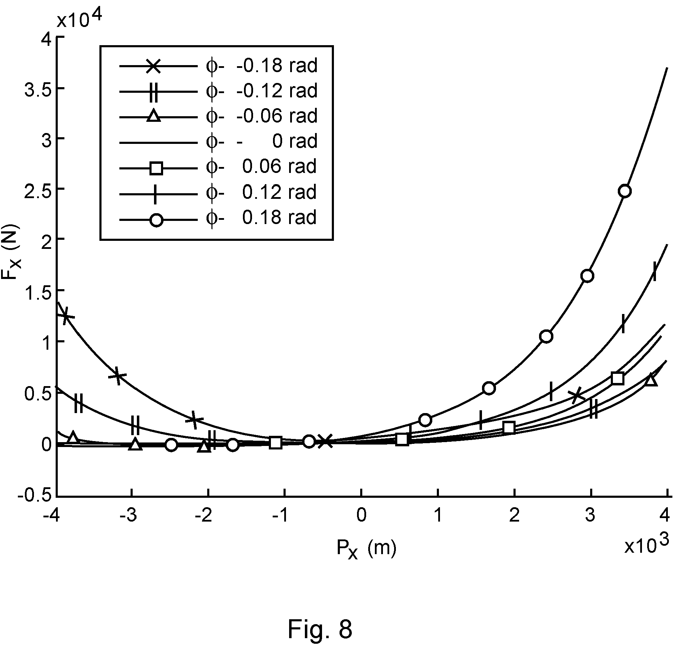

The test mass observation module 46 implements a state observation function used to provide estimates of the test mass states based on any kind of available test mass displacement measurements and, if necessary, also other inputs. The test mass state may include information relating to position and/or attitude and/or velocity and/or acceleration of the test mass and/or changes of any one of position, attitude, velocity, and acceleration of the test mass. The control module 42 implements a controller algorithm providing force and torque commands to control the test mass states after release to the desired state (e.g. control test mass position and velocity to zero). In contrast to the state of the art controller described above, the newly proposed method to derive the force/torque control commands makes use of an internal higher order electrostatic model to determine the available forces and torques. For example, the model can be approximated by polynomials or look-up tables that are generated offline and evaluated every command cycle for the current test mass state. The test mass state information is obtained by the state observation as indicated by the arrows from the test mass observation module 46 to the control module 42 and the actuation module 44. An example of a higher order force model used to derive the available force in the $x/\phi$ couple along the test mass x-coordinate as a function of its translational displacement and for its angular displacements of the coupled coordinate (in this case $\phi$) is shown in Fig. 8. The method also makes use of a force/torque apportionment scheme optimized for the expected release conditions. This apportionment is implicitly contained in the polynomials or look-up tables that can be regenerated on-board the S/C (see also Fig. 8). This is described by one scalar apportionment coefficient per degree of freedom couple, i.e., three in total, which apportions a fraction of the voltage for force commanding and the complementary part for torque commanding. See also Eq. (45) for the definition. The method also makes use of an extended optimal control law that considers varying force/torque actuation authorities (as they are depending on the test mass displacement).

The actuation module 44 converts commanded controller forces and torques into electrode actuation voltages. In contrast to the state of the art method to derive the actuation electrodes, the newly proposed methods features a significantly reduced force/torque error due to increasing the electrostatic model order. This leads to a conversion algorithm which takes into account the test mass displacement observations as indicated by the red arrow in the block diagram of Fig. 6. The newly proposed method also features a significant enhancement of the maximum delivered forces and torques and an option to reduce of the complexity in the GRS front-end electronics.

In the newly proposed method to capture and control the test mass, both the control module 42 and the actuation module 44 use information of the test mass state observation module 46.

As indicated above, the electrode-to-test-mass and electrode-to-housing capacitance Taylor series expansion is increased by one compared to the expression of Eq. (7):

$$
\begin{aligned}
C_{ELi,TM} = C_{ELi,TM,0} &\pm \frac{\partial C_{ELi,TM}}{\partial x} \cdot x \pm \frac{\partial C_{ELi,TM}}{\partial \phi} \cdot \phi \pm \frac{1}{2}\frac{\partial^2 C_{ELi,TM}}{\partial x^2} \cdot x^2 \\
&\pm \frac{1}{2}\frac{\partial^2 C_{ELi,TM}}{\partial \phi^2} \cdot \phi^2 \pm \frac{\partial^2 C_{ELi,TM}}{\partial y \partial \phi} \cdot y \cdot \phi \pm \frac{\partial^2 C_{ELi,TM}}{\partial x \partial \phi} \cdot x \cdot \phi
\end{aligned}
\tag{20}
$$

$$
\begin{aligned}
C_{ELi,H} = C_{ELi,H,0} &\pm \frac{\partial C_{ELi,H}}{\partial x} \cdot x \pm \frac{\partial C_{ELi,H}}{\partial \phi} \cdot \phi \pm \frac{1}{2}\frac{\partial^2 C_{ELi,H}}{\partial x^2} \cdot x^2 \\
&\pm \frac{1}{2}\frac{\partial^2 C_{ELi,H}}{\partial \phi^2} \cdot \phi^2 \pm \frac{\partial^2 C_{ELi,H}}{\partial y \partial \phi} \cdot y \cdot \phi \pm \frac{\partial^2 C_{ELi,H}}{\partial x \partial \phi} \cdot x \cdot \phi
\end{aligned}
\tag{21}
$$

The capacitance gradients can be derived from the second order capacitance Taylor series approximation of the electrode-to-test mass and electrode-to-housing capacitances introduced above and are given by:

$$
\frac{\partial C_{ELi,TM}}{\partial x} = \frac{\partial C_{ELi,TM}}{\partial x} \pm \frac{\partial^2 C_{ELi,TM}}{\partial x^2} \cdot x \pm \frac{\partial^2 C_{ELi,TM}}{\partial x \partial \phi} \cdot \phi
\tag{22}
$$

$$
\frac{\partial C_{ELi,H}}{\partial x} = \frac{\partial C_{ELi,H}}{\partial x} \pm \frac{\partial^2 C_{ELi,H}}{\partial x^2} \cdot x \pm \frac{\partial^2 C_{ELi,H}}{\partial x \partial \phi} \cdot \phi
\tag{23}
$$

If only the four capacitance expressions of one force/torque couple are considered (EL1-EL4, EL5-EL8, EL9-EL12), these expressions do not differ in the coefficient's absolute values but only in the sings of the coefficients. Further, only the sum of electrode-to-housing and electrode-to-test-mass capacitance is used. The expressions will be used without the indices (i) and reduced to the first order capacitance gradient model:

$$\frac{\partial C}{\partial x} = \frac{\partial C_{El,TM}}{\partial x} + \frac{\partial C_{El,H}}{\partial x} = \pm \frac{\partial C}{\partial x} \pm \frac{\partial^2 C}{\partial x^2} \cdot x \pm \frac{\partial^2 C}{\partial x \partial \phi} \cdot \phi \qquad (24)$$

The F-to-V conversion is used in combination with control laws in which force and torque commands are generated in such a way that physically feasible forces are obtained at the current test mass position/attitude relative to the electrode housing. This is achieved by variable controller gain computation using the force model (V-to-F equations) with information from current test mass state observations (e.g., obtained through direct measurements, application of filtering methods, etc.).

Generally, the steps to derive the proposed actuation algorithm are the following: using a higher order capacitance model, for example a second order capacitance model and a first order capacitance gradient model. These are inserted into the Voltage-to-Force/Torque equation and inverted to obtain a non-linear Force-to-Voltage equation which is linearized to obtain a linear Force-to-Voltage equation.

According to the approach described herein, the capacitance gradients use a first order model, which means that the test mass position and/or attitude observations are captured by the test mass observation module 46 and used by the actuation module 44. Two different strategies regarding the actuation for the three couples are possible: (1) alternating actuation, where the voltages for the force and for the torque generation are applied sequentially (i.e., separated over time). This is called force/torque duty cycle; (2) simultaneous actuation, where the voltages for the forces and for the torque generation are applied simultaneously (i.e., not separated over time).

Preferably, the simultaneous actuation is used, as described with reference to Fig. 5.

This leads to the following set of equations to be solved:

$$\begin{cases} \sum_{i=1}^{4} a_i(x)\, V_i^2 = F_x \\ \sum_{i=1}^{4} b_i(x)\, V_i^2 = T_\phi \\ \sum_{i=1}^{4} c_i(x)\, V_i = 0 \\ V_j = 0 \end{cases} \qquad (25)$$

The following equations show the force/torque-to-voltage conversion for the first actuation electrode:

$$V_1 = -\sqrt{\frac{-2\sqrt{S_1} + N_1 + \left(c_2^2(a_3 b_1 - a_1 b_3) + c_3^2(a_2 b_1 - a_1 b_2)\right) N_2}{c_3^4(a_2 b_1 - a_1 b_2)^2 + 2c_3^2(a_2 b_1 - a_1 b_2) D_1 + D_2^2}} \qquad (26)$$

Where:

$$S_1 = c_1^2 c_2^2 c_3^2 (a_3 b_2 - a_2 b_3)^2 (K_{x,\phi} \cdot F_\phi F_x - K_\phi \cdot F_\phi^2 - K_x \cdot F_x^2)$$

$$K_{x,\phi} = a_3 b_2 c_1^2 + a_2 b_3 c_1^2 + a_3 b_1 c_2^2 + a_1 b_3 c_2^2 + c_3^2 (a_2 b_1 + a_1 b_2)$$

$$K_\phi = a_2 a_3 c_1^2 + a_1 a_3 c_2^2 + a_1 a_2 c_3^2$$

$$K_x = b_2 b_3 c_1^2 + b_1 b_3 c_2^2 + b_1 b_2 c_3^2$$

$$(27)$$

$$N_1 = c_1^2 (a_3 b_2 - a_2 b_3)(c_3^2 (b_2 F_x - a_2 F_\phi) + a_3 c_2^2 F_\phi - b_3 c_2^2 F_x$$

$$N_2 = a_3 c_2^2 F_\phi + a_2 c_3^2 F_\phi - F_x (b_3 c_2^2 + b_2 c_3^2)$$

$$D_1 = -a_3 b_2 c_1^2 + a_2 b_3 c_1^2 + a_3 b_1 c_2^2 - a_1 b_3 c_2^2$$

$$D_2 = c_1^2 (a_3 b_2 - a_2 b_3) + c_2^2 (a_3 b_1 - a_1 b_3)$$

Due to the complexity of the resulting expressions, the solutions for the other voltages $V_2$ to $V_{12}$ are not explicitly shown here. These solutions are obtained without explicit expressions for the state dependent coefficients $a_i$, $b_i$ and $c_i$ coefficients.

The derived mathematical expression (i.e., Eq. (26) for the first electrode voltage and likewise the similar expressions for the other electrode voltages) exhibits singularities. In order to overcome these singularities and to get a more robust form of the force-to-voltage conversion laws, the expressions are linearized around the nominal test mass position and attitude, respectively.

The voltage expressions are linearized by using, in this example, a first order Taylor-series-expansion. In order to illustrate the solution of the proposed invention, the relations for the coefficients $a_i$, $b_i$ and $c_i$ are shown here for the x/$\Phi$-couple. The expressions for the y/$\theta$-couple and for the z/$\eta$-couple are similar. Note that the absolute values of the capacitance coefficients equal each other in the equations for all four electrodes of one equation system (here: Electrodes 1-4).

$$a_1 = \frac{\partial C_{El1,TM}}{\partial x} + \frac{\partial C_{El1,H}}{\partial x} = +\frac{\partial C}{\partial x} + \frac{\partial^2 C}{\partial x^2} \cdot x + \frac{\partial^2 C}{\partial x \partial \phi} \cdot \phi \qquad (28)$$

$$a_2 = \frac{\partial C_{El2,TM}}{\partial x} + \frac{\partial C_{El2,H}}{\partial x} = +\frac{\partial C}{\partial x} + \frac{\partial^2 C}{\partial x^2} \cdot x - \frac{\partial^2 C}{\partial x \partial \phi} \cdot \phi \qquad (29)$$

$$a_3 = \frac{\partial C_{El3,TM}}{\partial x} + \frac{\partial C_{El3,H}}{\partial x} = -\frac{\partial C}{\partial x} + \frac{\partial^2 C}{\partial x^2} \cdot x - \frac{\partial^2 C}{\partial x \partial \phi} \cdot \phi \qquad (30)$$

$$a_4 = \frac{\partial C_{El4,TM}}{\partial x} + \frac{\partial C_{El4,H}}{\partial x} = -\frac{\partial C}{\partial x} + \frac{\partial^2 C}{\partial x^2} \cdot x + \frac{\partial^2 C}{\partial x \partial \phi} \cdot \phi \qquad (31)$$

$$b_1 = \frac{\partial C_{El1,TM}}{\partial \phi} + \frac{\partial C_{El1,H}}{\partial \phi} = \frac{\partial C}{\partial \phi} + \frac{\partial^2 C}{\partial x \partial \phi} \cdot x + \frac{\partial^2 C}{\partial \phi^2} \cdot \phi + \frac{\partial^2 C}{\partial y \partial \phi} \cdot y \qquad (32)$$

$$b_2 = \frac{\partial C_{El2,TM}}{\partial \phi} + \frac{\partial C_{El2,H}}{\partial \phi} = -\frac{\partial C}{\partial \phi} - \frac{\partial^2 C}{\partial x \partial \phi} \cdot x + \frac{\partial^2 C}{\partial \phi^2} \cdot \phi + \frac{\partial^2 C}{\partial y \partial \phi} \cdot y \quad (33)$$

$$b_3 = \frac{\partial C_{El3,TM}}{\partial \phi} + \frac{\partial C_{El3,H}}{\partial \phi} = +\frac{\partial C}{\partial \phi} - \frac{\partial^2 C}{\partial x \partial \phi} \cdot x + \frac{\partial^2 C}{\partial \phi^2} \cdot \phi - \frac{\partial^2 C}{\partial y \partial \phi} \cdot y \quad (34)$$

$$b_4 = \frac{\partial C_{El4,TM}}{\partial \phi} + \frac{\partial C_{El4,H}}{\partial \phi} = -\frac{\partial C}{\partial \phi} + \frac{\partial^2 C}{\partial x \partial \phi} \cdot x + \frac{\partial^2 C}{\partial \phi^2} \cdot \phi - \frac{\partial^2 C}{\partial y \partial \phi} \cdot y \quad (35)$$

$$c_1 = C_{EL1,TM} = C_{TM0} + \frac{\partial C_{TM}}{\partial x} \cdot x + \frac{\partial C_{TM}}{\partial \phi} \cdot \phi \quad (36)$$

$$c_2 = C_{EL2,TM} = C_{TM0} + \frac{\partial C_{TM}}{\partial x} \cdot x - \frac{\partial C_{TM}}{\partial \phi} \cdot \phi \quad (37)$$

$$c_3 = C_{EL3,TM} = C_{TM0} - \frac{\partial C_{TM}}{\partial x} \cdot x + \frac{\partial C_{TM}}{\partial \phi} \cdot \phi \quad (38)$$

$$c_4 = C_{EL4,TM} = C_{TM0} - \frac{\partial C_{TM}}{\partial x} \cdot x - \frac{\partial C_{TM}}{\partial \phi} \cdot \phi \quad (39)$$

The finally obtained solution shows a linear coupling to specific test mass displacement and can be written as:

$$\begin{pmatrix} V_{F+T} \\ V_F \\ V_T \\ V_0 \end{pmatrix} = \begin{pmatrix} V_{F+T,0} \\ V_{F,0} \\ V_{T,0} \\ 0 \end{pmatrix} + \mathrm{sgn}(F_x) \cdot \mathrm{sgn}(T_\phi) \cdot \begin{pmatrix} V_{F+T,y} \\ V_{F,y} \\ V_{T,y} \\ 0 \end{pmatrix} \cdot y +$$

$$\mathrm{sgn}(F_x) \cdot \begin{pmatrix} V_{F+T,x} \\ V_{F,x} \\ V_{T,x} \\ 0 \end{pmatrix} \cdot x + \mathrm{sgn}(T_\phi) \cdot \begin{pmatrix} V_{F+T,\phi} \\ V_{F,\phi} \\ V_{T,\phi} \\ 0 \end{pmatrix} \cdot \phi \quad (40)$$

For each test mass coordinate couple, the four voltages have to be applied to the according electrodes using a specific voltage application scheme which depends on the sign of both the commanded forces and torques.

As an example, for the x/Φ-couple, the voltages are applied to the four electrodes EL1-EL4 depending on the sign of the commanded force $F_x$ and the commanded torque $T_\phi$. The electrode nomenclature for this scenario is graphically illustrated in Fig. 7 and in correspondence with Fig. 2. The detailed voltage application scheme for the improved force-to voltage conversion method proposed by this description is shown in Table 2.

Table 2: Voltage application scheme of the actuation module

| | $F_x \geq 0$ and $T_\phi \geq 0$ | $F_x \geq 0$ and $T_\phi < 0$ | $F_x < 0$ and $T_\phi \geq 0$ | $F_x < 0$ and $T_\phi < 0$ |
|---|---|---|---|---|
| Electrod e 1 | $V_{F+T,0}$ $+V_{F+T,x} \cdot x$ $+V_F+T,y \cdot y$ $+V_{F+T,\phi} \cdot \phi$ | $V_{F,0}$ $+V_{F,x} \cdot x$ $-V_{F,y} \cdot y$ $-V_{F,\Phi} \cdot \Phi$ | $V_{T,0}$ $-V_{T,x} \cdot x$ $-V_{T,y} \cdot y$ $+V_{T,\Phi} \cdot \Phi$ | $V_0$ |
| Electrod e 2 | $V_{F,0}$ $+V_{F,x} \cdot x$ $+V_{F,y} \cdot y$ $+V_{F,\phi} \cdot \phi$ | $V_{F+T,0}$ $+V_{F+T,x} \cdot x$ $-V_{F+T,y} \cdot y$ $-V_{F+T,\Phi} \cdot \Phi$ | $V_0$ | $V_{T,0}$ $-V_{T,x} \cdot x$ $+V_{T,y} \cdot y$ $-V_{T,\phi} \cdot \Phi$ |
| Electrod e 3 | $V_{T,0}$ $+V_{T,x} \cdot X$ $+V_{T,y} \cdot y$ $+V_{T,\Phi} \cdot \Phi$ | $V_0$ | $V_{F+T,0}$ $+V_{F+T,x} \cdot x$ $-V_{F+T,y} \cdot y$ $+V_{F+T,\Phi} \cdot \Phi$ | $V_{F,0}$ $-V_{F,x} \cdot x$ $+V_{F,y} \cdot y$ $-V_{F,\Phi} \cdot \Phi$ |
| Electrod e 4 | $V_0$ | $V_{T,0}$ $+V_{T,x} \cdot x$ $-V_{T,y} \cdot y$ $-V_{T,\Phi} \cdot \Phi$ | $V_{F,0}$ $-V_{F,x} \cdot x$ $-V_{F,y} \cdot y$ $+V_{F,\Phi} \cdot \phi$ | $V_{F+T,0}$ $-V_{F+T,x} \cdot x$ $+V_{F+T,y} \cdot y$ $-V_{F+T,\Phi} \cdot \phi$ |

The expressions in the vectors on the right-hand side of the equation (40) are non-linear. They are a function of the absolute values of the $F_x$ and $T_\phi$ commands and include various capacitance and capacitance gradient expressions which are evaluated at the nominal test mass position:

$$\begin{pmatrix} V_{F+T,0} \\ V_{F,0} \\ V_{T,0} \end{pmatrix} = \begin{pmatrix} -\sqrt{\dfrac{F_x}{K_1} + \dfrac{T_\phi}{K_2}} \\ \dfrac{F_x K_4}{\sqrt{T_\phi K_1 + F_x K_2 K_3}} \\ \dfrac{F_x K_3}{\sqrt{T_{\phi K_1} + F_x K_2 K_4}} \end{pmatrix} \qquad (41)$$

$$\begin{pmatrix} V_{F+T,x} \\ V_{F,x} \\ V_{T,x} \end{pmatrix} = \begin{pmatrix} \dfrac{\sqrt{\dfrac{F_X}{K_1} + \dfrac{T_\phi}{K_2}} \left( F_x^2 K_5 + F_x T_\phi K_6 + T_\phi^2 K_7 \right)}{2 K_1 \left( T_\phi K_1 + F_x K_2 \right)^2} \\ \dfrac{F_x T_\phi^2 K_{10} + T_\phi^3 K_{11} - F_x^3 K_8 + F_x^2 T_\phi K_9}{\left( T_\phi K_1 + F_x K_2 \right)^{\frac{5}{2}}} \\ \dfrac{T_\phi \left( F_x^2 K_{12} + F_x T_\phi K_{13} + T_\phi^2 K_{14} \right)}{\left( T_\phi K_1 + F_x K_2 \right)^{\frac{5}{2}}} \end{pmatrix} \qquad (42)$$

$$\begin{pmatrix} V_{F+T,y} \\ V_{F,y} \\ V_{T,y} \end{pmatrix} = \begin{pmatrix} \dfrac{F_x}{2\sqrt{\dfrac{F_x}{K_1} + \dfrac{T_\phi}{K_2} K_2}} \\[12pt] \dfrac{F_x^2 K_3 K_4}{2(T_\phi K_1 + F_x K_2)^{\frac{3}{2}}} \\[12pt] \dfrac{-F_x(T_\phi K_1 + 2F_x K_2) K_3}{2(T_\phi K_1 + F_x K_2)^{\frac{3}{2}} K_4} \end{pmatrix} \tag{43}$$

$$\begin{pmatrix} V_{F+T,\phi} \\ V_{F,\phi} \\ V_{T,\phi} \end{pmatrix} = \begin{pmatrix} \dfrac{(F_x^2 K_{15} + F_x T_\phi K_{16} + T_\phi^2 K_{17})\sqrt{\dfrac{F_x}{K_1} + \dfrac{T_\phi}{K_2}}}{2\backslash K_2(T_\phi K_1 + F_x K_2)^2} \\[12pt] \dfrac{F_x(F_x^2 K_{18} + F_x T_\phi K_{19} + T_\phi^2 K_{20}}{(T_\phi K_1 + F_x K_2)^{\frac{5}{2}}} \\[12pt] \dfrac{F_x^3 K_{21} + F_x^2 + T_\phi K_{22} + F_x T_\phi^2 K_{23} - T_\phi^3 K_{24}}{(T_\phi K_1 + F_x K_2)^{\frac{5}{2}}} \end{pmatrix} \tag{44}$$

The expressions for $K_1$ to $K_{24}$ are as follows:

$$K_1 = \left.\frac{\partial C}{\partial x}\right|_{x=0} \tag{45}$$

$$K_2 = \left.\frac{\partial C}{\partial \varphi}\right|_{\varphi=0} \tag{46}$$

$$K_3 = \sqrt{\left.\frac{\partial C}{\partial x}\right|_{x=0}} \tag{47}$$

$$K_4 = \sqrt{\left.\frac{\partial C}{\partial \varphi}\right|_{\varphi=0}} \tag{48}$$

$$K_5 = \left.\frac{\partial^2 C}{\partial x^2}\right|_{x=0} \left(\left.\frac{\partial C}{\partial \varphi}\right|_{\varphi=0}\right)^2 \tag{49}$$

$$K_6 = \left.\frac{\partial C}{\partial x}\right|_{x=0} \left( \left.\frac{\partial^2 C}{\partial x \partial \varphi}\right|_{x,\varphi=0} \left.\frac{\partial C}{\partial x}\right|_{x=0} + \left.\frac{\partial^2 C}{\partial x^2}\right|_{x=0} \left.\frac{\partial C}{\partial \varphi}\right|_{\varphi=0} \right) \tag{50}$$

$$K_7 = \left.\frac{\partial^2 C}{\partial x^2}\right|_{x=0} \left.\frac{\partial C}{\partial x}\right|_{x=0}^2 \tag{51}$$

$$K_8 = \frac{\left.\dfrac{\partial^2 C}{\partial x^2}\right|_{x=0} \left.\dfrac{\partial C}{\partial \varphi}\right|_{\varphi=0}^{5/2}}{2 \left.\dfrac{\partial C}{\partial \varphi}\right|_{\varphi=0}^{3/2}} \tag{52}$$

$$K_9 = \frac{\sqrt{\left.\dfrac{\partial C}{\partial \varphi}\right|_{\varphi=0}} \left( \left.\dfrac{\partial^2 C}{\partial x \partial \varphi}\right|_{x,\varphi=0} \left.\dfrac{\partial C}{\partial x}\right|_{x=0} - 3 \left.\dfrac{\partial^2 C}{\partial x^2}\right|_{x=0} \left.\dfrac{\partial C}{\partial \varphi}\right|_{\varphi=0} \right)}{2 \sqrt{\left.\dfrac{\partial C}{\partial x}\right|_{x=0}}} \tag{53}$$

$$K_{10} = \frac{\sqrt{\left.\dfrac{\partial C}{\partial \varphi}\right|_{\varphi=0}} \sqrt{\left.\dfrac{\partial C}{\partial x}\right|_{x=0}} \left( -3 \, C_{TM,0} \left.\dfrac{\partial^2 C}{\partial x^2}\right|_{x=0} + 4 \left.\dfrac{\partial C}{\partial x}\right|_{x=0} \left.\dfrac{\partial C_{TM}}{\partial x}\right|_{x=0} \right)}{2 \, C_{TM,0}} \tag{54}$$

$$K_{11} = \frac{\left.\dfrac{\partial C}{\partial x}\right|_{x=0}^{3/2} \left( -C_{TM,0} \left.\dfrac{\partial^2 C}{\partial x^2}\right|_{x=0} + 2 \left.\dfrac{\partial C}{\partial x}\right|_{x=0} \left.\dfrac{\partial C_{TM}}{\partial x}\right|_{x=0} \right)}{C_{TM,0} \sqrt{\left.\dfrac{\partial C}{\partial \varphi}\right|_{\varphi=0}}} \tag{55}$$

$$K_{12} = \frac{\sqrt{\left.\dfrac{\partial C}{\partial \varphi}\right|_{\varphi=0}} \left( -2 \left.\dfrac{\partial^2 C}{\partial x \partial \varphi}\right|_{x,\varphi=0} \left.\dfrac{\partial C}{\partial x}\right|_{x=0} + \left.\dfrac{\partial^2 C}{\partial x^2}\right|_{x=0} \left.\dfrac{\partial C}{\partial \varphi}\right|_{\varphi=0} \right)}{2 \sqrt{\left.\dfrac{\partial C}{\partial x}\right|_{x=0}}} + \tag{56}$$

$$\frac{2 \sqrt{\left.\dfrac{\partial C}{\partial \varphi}\right|_{\varphi=0}} \left.\dfrac{\partial C}{\partial x}\right|_{x=0} \left.\dfrac{\partial C}{\partial \varphi}\right|_{\varphi=0} \left.\dfrac{\partial C_{TM}}{\partial x}\right|_{x=0}}{C_{TM,0} \sqrt{\left.\dfrac{\partial C}{\partial x}\right|_{x=0}}}$$

$$K_{13} = \frac{\sqrt{\left.\frac{\partial C}{\partial x}\right|_{x=0}}\left(-\left.\frac{\partial^2 C}{\partial x \partial \varphi}\right|_{x,\varphi=0}\left.\frac{\partial C}{\partial x}\right|_{x=0} + \left.\frac{\partial^2 C}{\partial x^2}\right|_{x=0}\left.\frac{\partial C}{\partial \varphi}\right|_{\varphi=0}\right)}{2\sqrt{\left.\frac{\partial C}{\partial \varphi}\right|_{\varphi=0}}} +$$

$$\frac{2\sqrt{\left.\frac{\partial C}{\partial x}\right|_{x=0}}\left.\frac{\partial C}{\partial x}\right|_{x=0}\left.\frac{\partial C}{\partial \varphi}\right|_{\varphi=0}\left.\frac{\partial C_{TM}}{\partial x}\right|_{x=0}}{C_{TM,0}\sqrt{\left.\frac{\partial C}{\partial \varphi}\right|_{\varphi=0}}} \tag{57}$$

$$K_{14} = \frac{\left.\frac{\partial^2 C}{\partial x^2}\right|_{x=0}\left.\frac{\partial C}{\partial x}\right|_{x=0}^{3/2}}{2\sqrt{\left.\frac{\partial C}{\partial \varphi}\right|_{\varphi=0}}} \tag{58}$$

$$K_{15} = \left.\frac{\partial^2 C}{\partial \varphi^2}\right|_{\varphi=0}\left.\frac{\partial C}{\partial \varphi}\right|_{\varphi=0}^{2} \tag{59}$$

$$K_{16} = \left.\frac{\partial C}{\partial \varphi}\right|_{\varphi=0}\left(\left.\frac{\partial^2 C}{\partial \varphi^2}\right|_{\varphi=0}\left.\frac{\partial C}{\partial x}\right|_{x=0} + \left.\frac{\partial^2 C}{\partial x \partial \varphi}\right|_{x,\varphi=0}\left.\frac{\partial C}{\partial \varphi}\right|_{\varphi=0}\right) \tag{60}$$

$$K_{17} = \left.\frac{\partial^2 C}{\partial \varphi^2}\right|_{\varphi=0}\left.\frac{\partial C}{\partial x}\right|_{x=0}^{2} \tag{61}$$

$$K_{18} = \frac{\left.\frac{\partial^2 C}{\partial \varphi^2}\right|_{\varphi=0}\left.\frac{\partial C}{\partial \varphi}\right|_{\varphi=0}^{3/2}}{2\sqrt{\left.\frac{\partial C}{\partial x}\right|_{x=0}}} \tag{62}$$

$$K_{19} = \frac{\sqrt{\left.\frac{\partial C}{\partial \varphi}\right|_{\varphi=0}} \left(\left.\frac{\partial^2 C}{\partial \varphi^2}\right|_{\varphi=0} \left.\frac{\partial C}{\partial x}\right|_{x=0} - \left.\frac{\partial^2 C}{\partial x \partial \varphi}\right|_{x,\varphi=0} \left.\frac{\partial C}{\partial \varphi}\right|_{\varphi=0}\right)}{2\sqrt{\left.\frac{\partial C}{\partial x}\right|_{x=0}}} +$$

$$\frac{2\sqrt{dCd\phi0}\left.\frac{\partial C}{\partial x}\right|_{x=0}\left.\frac{\partial C}{\partial \varphi}\right|_{\varphi=0}\left.\frac{\partial C_{TM}}{\partial \varphi}\right|_{\varphi=0}}{C_{TM,0}\sqrt{\left.\frac{\partial C}{\partial x}\right|_{x=0}}}$$

(63)

$$K_{20} = \frac{\sqrt{\left.\frac{\partial C}{\partial x}\right|_{x=0}} \left(\left.\frac{\partial^2 C}{\partial \varphi^2}\right|_{\varphi=0} \left.\frac{\partial C}{\partial x}\right|_{x=0} - 2\left.\frac{\partial^2 C}{\partial x \partial \varphi}\right|_{x,\varphi=0} \left.\frac{\partial C}{\partial \varphi}\right|_{\varphi=0}\right)}{2\sqrt{\left.\frac{\partial C}{\partial \varphi}\right|_{\varphi=0}}} +$$

$$\frac{2\sqrt{\left.\frac{\partial C}{\partial x}\right|_{x=0}}\left.\frac{\partial C}{\partial x}\right|_{x=0}\left.\frac{\partial C}{\partial \varphi}\right|_{\varphi=0}\left.\frac{\partial C_{TM}}{\partial \varphi}\right|_{\varphi=0}}{C_{TM,0}\sqrt{\left.\frac{\partial C}{\partial \varphi}\right|_{\varphi=0}}}$$

(64)

$$K_{21} = \frac{\left.\frac{\partial C}{\partial \varphi}\right|_{\varphi=0}^{3/2}\left(-C_{TM,0}\left.\frac{\partial^2 C}{\partial \varphi^2}\right|_{\varphi=0} + 2\left.\frac{\partial C}{\partial \varphi}\right|_{\varphi=0}\left.\frac{\partial C_{TM}}{\partial \varphi}\right|_{\varphi=0}\right)}{C_{TM,0}\sqrt{\left.\frac{\partial C}{\partial x}\right|_{x=0}}}$$

(65)

$$K_{22} = \frac{\sqrt{\left.\frac{\partial C}{\partial \varphi}\right|_{\varphi=0}}\sqrt{\left.\frac{\partial C}{\partial x}\right|_{x=0}}\left(-3\,C_{TM,0}\left.\frac{\partial^2 C}{\partial \varphi^2}\right|_{\varphi=0} + 4\left.\frac{\partial C}{\partial \varphi}\right|_{\varphi=0}\left.\frac{\partial C_{TM}}{\partial \varphi}\right|_{\varphi=0}\right)}{2\,C_{TM,0}}$$

(66)

$$K_{23} = \frac{\sqrt{\left.\frac{\partial C}{\partial x}\right|_{x=0}}\left(-3\left.\frac{\partial^2 C}{\partial \varphi^2}\right|_{\varphi=0}\left.\frac{\partial C}{\partial x}\right|_{x=0} + \left.\frac{\partial^2 C}{\partial x \partial \varphi}\right|_{x,\varphi=0}\left.\frac{\partial C}{\partial \varphi}\right|_{\varphi=0}\right)}{2\sqrt{\left.\frac{\partial C}{\partial \varphi}\right|_{\varphi=0}}}$$

(67)

$$K_{24} = \frac{\left.\frac{\partial^2 C}{\partial \varphi^2}\right|_{\varphi=0} \left.\frac{\partial C}{\partial x}\right|_{x=0}^{5/2}}{2 \left.\frac{\partial C}{\partial \varphi}\right|_{\varphi=0}^{3/2}} \qquad (68)$$

The maximum voltage $V_{max}$ that can be applied per electrode can be apportioned between the forces and torques. This can be done in a linear manner in accordance with Eq. (45):

$$\begin{cases} V_F = k_{F,q} \cdot V_{max} \\ V_T = (1 - k_{F,q}) \cdot V_{max} \end{cases} \qquad (69)$$

where $0 < k_{F,q} < 1$ is the apportionment coefficient setting the fraction of $V_{max}$ available for the force actuation, leaving the complementary part for torque commanding. The coefficient can be individually set for each of the three force-torque pairs.

The value of $k_{F,q}$ can be set according to the expected or observed release conditions within each pair. During a dedicated test mass release test campaign performed at the end of the LISA Pathfinder technology demonstrator mission, the test mass release dynamics around test mass - $\Phi$ where significantly larger than along test mass - x, which would favor an apportionment coefficient $k_{F,q} < 0.5$ for the x/$\Phi$-pair. On the other hand, the very large release velocities along the test mass z-axis would benefit from a coefficient $k_{F,q}$ towards one. In LPF such adaptation was not possible.

In the approach proposed herein, the apportionment coefficient can be updated and the update rate of the three maximum voltage force/torque apportionment coefficients can be chosen according to the mission needs - for example based on the real observed release conditions identified in-flight. For example, the voltage force/torque apportionment coefficients can be set before flight and held constant throughout the mission; updated in-flight based on the previous test mass releases information available from telemetry (e.g., the coefficients can be determined on ground and updates can be set by telecommand); continuously or quasi-continuously updated on-line (e.g., with an update rate given by the commanding rate of the closed-loop system or a multiple of this rate, based on the actual measurements or observations).

The updated method for calculating the control law uses gains (ref. Eq. (18)) that are chosen such that the physically correct forces and torques are commanded. Consequently, these gains are not assumed constant for the controller design as is done in the state of the art method but change depending on the evaluation of the test mass displacement information from the state observation function. The update rate can be done with each new force and torque command or a multiple of the commanding rate.

A summary of relevant steps for the proposed method to update the gains of the control law is: measure or observe the test mass state, set an optimal voltage apportionment between the forces and torques for each of the three test mass force/torque couples, generate polynomials with available force and torque authorities, retrieve the available forces and torques at the observed test mass state, and command the maximum available forces and torques.

The expression for the controller force or torque $U_q$ along the coordinate q can be written as:

$$u_{q,N}(q) = -\sum_{k=1}^{p} u_{k,q} \cdot q^k \cdot sgn(s_1), \qquad (70)$$

where $u_{k,q}$ are the coefficients of polynomials of order p. These polynomials describe the available forces or torques along the respective test mass coordinate for a given (i.e., selected) force/torque maximum voltage apportionment.

An illustrative example of such a polynomial is shown in Fig. 8 for the available force along the test mass x-coordinate as a function of the displacements along x and $\Phi$. The voltage apportionment factor in the example has been chosen to allocate 60% of the maximum available electrode voltages to the force generation and 40% to the torque generation.

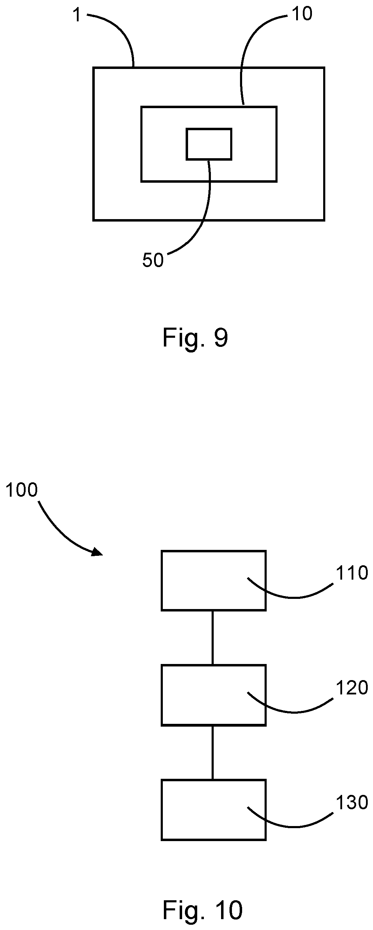

Fig. 9 shows an exemplary application of a control system 10 with a test mass 50 in a spacecraft 1. As describe above, the entire system may comprise three spacecraft 1, each of which comprises two test masses 50. The two test masses may be captured and controlled by one controller 40 or by two distinct controllers 40, respectively.

Fig. 10 schematically shows a method 100 for capturing and controlling a test mass that is released into free flight. The method of this example comprises the steps: determining a position and/or attitude of the test mass 50 with respect to the actuation and sensing arrangements 22 in a first step 110; determining a required electrostatic force for being applied to the test mass 50 based on the position and/or attitude of the test mass 50 and in consideration of a desired position and/or attitude of the test mass 50 with respect to the electrode housing 12 in a second step 120; determining, for each actuation and sensing arrangement 22, a control command for driving the actuation and sensing arrangement 22 with a control voltage for moving the test mass 50 into the desired position and/or attitude between the actuation and sensing arrangements 22, wherein the control command for moving the test mass 50 with the control voltage into the desired position and/or attitude is determined based on the on the required electrostatic force and the determined position and/or attitude of the test mass 50 between the actuation and sensing arrangements 22 in a third step 120; and applying the control voltages to the respective actuation and sensing arrangements 22, which may be part of the third step 130 or part of a subsequent step that is not expressly shown.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

List of reference signs

1      spacecraft
10     control system
12     electrode housing
13     cavity
14     housing structure
16     electrode frame
18     cover
20     signal injection device (EL13 to EL18)
22     actuation and sensing arrangement (EL1 to EL12)
24     caging mechanism
26     locking mechanism
28     opening
30     opening
40     controller
42     control module
44     actuation module
46     test mass observation module
50     test mass
52     test mass reference

**Claims**

1. Control system (10) for electrostatic capturing and controlling of a position and an attitude of a test mass (50) after release into free fall, the control system (10) comprising:

   a locking mechanism (26) for holding and releasing the test mass (50);
   multiple actuation and sensing arrangements (22);
   an electrode housing (12) with a cavity (13), the cavity (13) being configured for receiving the test mass (50);
   a controller (40) that is electrically connected to each of the actuation and sensing arrangements (22);
   wherein the actuation and sensing arrangements (22) are mounted to the electrode housing (12) so that at least one actuation and sensing arrangement (22) is arranged at each side of the cavity (13);
   wherein the actuation and sensing arrangements (22) are configured to detect a position and an attitude of the test mass (50) in the cavity (13) with respect to the electrode housing (12);
   wherein the actuation and sensing arrangements (22) are configured to apply an electrostatic force to the test mass (50) in response to which the test mass (50) changes its position and attitude with respect to the electrode housing (12);
   wherein

the controller (40) comprises a control module (42) and an actuation module (44);

the controller (40) is configured to receive a position and attitude value of the test mass (50) with respect to the electrode housing (12);

the control module (42) is configured to determine the electrostatic force for being applied to the test mass (50) based on the received position and attitude value and in consideration of a desired position and attitude of the test mass with respect to the electrode housing (12);

the actuation module (42) is configured to generate a control command for driving the actuation and sensing arrangements (22) with a control voltage based on the electrostatic force determined by the control module (42) and the received position and attitude value;

the control module (42) and the actuation module (42) are configured to use the received position and attitude value in a higher order electrostatic force/torque model of the test mass (50) within the control system (10) to determine the electrostatic force and the control voltage, respectively, to move the test mass (50) into the desired position and attitude of the test mass (50) with respect to the electrode housing (12), wherein an inverse of the higher order electrostatic force/torque model is used in the actuation module to obtain the corresponding voltages.

2. The control system (10) of claim 1, further comprising

a signal injection device (20);

wherein the signal injection device (20) is configured to apply a signal to the test mass (50);

wherein the actuation and sensing arrangements are configured to detect a signal emanated by the test mass, generate a distance signal based on the detected signal, and transmit the distance signal to the controller (40);

wherein the controller (40) is configured to determine a distance between the test mass and the actuation and sensing arrangements (22) on each side of the cavity (13) based on the distance signal in order to determine the position and/or attitude of the test mass with respect to the electrode housing (12).

3. The control system (10) of claim 2,
wherein the signal injection device (20) comprises multiple injection electrodes that are arranged at at least two sides of the cavity (13).

4. The control system (10) of any one of the preceding claims,
wherein a force/torque-pair along a spatial axis and about a spatial axis is applied by at least three actuation and sensing arrangements (22).

5. The control system (10) of any one of the preceding claims,
wherein the control module (42) is configured to generate a control command which causes the actuation and sensing arrangements to concurrently exert a force onto the test mass (50) along at least one spatial axis and a torque about at least one spatial axis.

6. The control system (10) of any one of the preceding claims,
wherein the controller (40) is configured to generate the control command for driving the actuation and sensing arrangements (22) with a control voltage based on a set of polynomials or based on a look-up table.

7. The control system (10) of any one of the preceding claims,
wherein the controller (40) is configured to determine capacitance values and capacitance gradients of a capacitance between the actuation and sensing arrangements (22) and the test mass (50) for generating the control command for driving the actuation and sensing arrangements with a control voltage at the current position and attitude of the test mass (50).

8. A spacecraft (1), comprising:

a control system (10) of any one of claims 1 to 7; and
a test mass (50);
wherein the test mass (50) is located in the cavity (13) of the electrode housing (12) with the locking mechanism (26) holding the test mass (50) in position.

9. A method for capturing a test mass (50) within an electrode housing (12) of a spacecraft (1) with multiple actuation and sensing arrangements (22), the method comprising the steps of:

determining a position and attitude of the test mass (50) with respect to the actuation and sensing arrangements (22);

determining a required electrostatic force for being applied to the test mass (50) based on the position and attitude of the test mass (50) and in consideration of a desired position and attitude of the test mass (50) with respect to the electrode housing (12);

determining, for each actuation and sensing arrangement (22), a control command for driving the actuation and sensing arrangement (22) with a control voltage for moving the test mass (50) into the desired position and attitude between the actuation and sensing arrangements (22);

wherein the control command for moving the test mass (50) with the control voltage into the desired position and attitude is determined based on the required electrostatic force and the determined position and attitude of the test mass (50) between the actuation and sensing arrangements (22);

applying the control voltage to each actuation and sensing arrangement (22);

wherein the method further comprises using the position and attitude of the test mass (50) in a higher order electrostatic model of the test mass (50) to determine the electrostatic force and the control voltage to move the test mass (50) into the desired position and attitude of the test mass (50) with respect to the electrode housing (12), wherein an inverse of the higher order electrostatic force/torque model is used to obtain the corresponding voltages.

10. The method of claim 9, further comprising:

applying a signal to the test mass (50);
detecting a signal emanated by the test mass;
generating a distance signal based on the detected signal;
determining a distance between the test mass and the actuation and sensing arrangements (22) on each side of the cavity (13) based on the distance signal in order to determine the position and/or attitude of the test mass with respect to the electrode housing (12).

11. The method of claim 9 or 10, further comprising:
applying a force/torque-pair along a spatial axis and about a spatial axis by at least three actuation and sensing arrangements (22).

12. The method of any one of claims 9 to 11, further comprising:
generating a control command which causes the actuation and sensing arrangements to concurrently exert a force onto the test mass (50) along at least one spatial axis and a torque about at least one spatial axis.

13. The method of any one of claims 9 to 12, further comprising:
dynamically apportioning force and torque applied to the test mass.

14. The method of any one of claims 9 to 13, further comprising:
generating the control command for driving the actuation and sensing arrangements (22) with a control voltage based on a set of polynomials or based on a look-up table.

**Patentansprüche**

1. Steuerungssystem (10) zum elektrostatischen Einfangen und Steuern einer Position und einer Lage einer Testmasse (50) nach dem Loslassen in den freien Fall, wobei das Steuerungssystem (10) Folgendes umfasst:

einen Arretiermechanismus (26) zum Halten und Loslassen der Testmasse (50);
mehrere Aktuations- und Erfassungsanordnungen (22);
ein Elektrodengehäuse (12) mit einem Hohlraum (13), wobei der Hohlraum (13) dazu konfiguriert ist, die Testmasse (50) aufzunehmen;
eine Steuerung (40), die elektrisch mit jeder der Aktuations- und Erfassungsanordnungen (22) verbunden ist;
wobei die Aktuations- und Erfassungsanordnungen (22) so an dem Elektrodengehäuse (12) montiert sind, dass an jeder Seite des Hohlraums (13) mindestens eine Aktuations- und Erfassungsanordnung (22) angeordnet ist;
wobei die Aktuations- und Erfassungsanordnungen (22) dazu konfiguriert sind, eine Position und eine Lage der Testmasse (50) in dem Hohlraum (13) in Bezug auf das Elektrodengehäuse (12) zu detektieren;
wobei die Aktuations- und Erfassungsanordnungen (22) dazu konfiguriert sind, eine elektrostatische Kraft auf die Testmasse (50) auszuüben, woraufhin die Testmasse (50) ihre Position und Lage in Bezug auf das Elektrodengehäuse (12) ändert;
wobei
die Steuerung (40) ein Steuerungsmodul (42) und ein Aktuationsmodul (44) umfasst;
die Steuerung (40) dazu konfiguriert ist, einen Positions- und Lagewert der Testmasse (50) in Bezug auf das Elektrodengehäuse (12) zu empfangen;
das Steuerungsmodul (42) dazu konfiguriert ist, die auf die Testmasse (50) auszuübende elektrostatische Kraft basierend auf dem empfangenen Positions- und Lagewert und unter Berücksichtigung einer gewünschten Position und Lage der Testmasse in Bezug auf das Elektrodengehäuse (12) zu bestimmen;
das Aktuationsmodul (42) dazu konfiguriert ist, einen Steuerbefehl zum Ansteuern der Aktuations- und Erfassungsanordnungen (22) mit einer Steuerspannung basierend auf der durch das Steuerungsmodul (42) bestimmten elektrostatischen Kraft und dem empfangenen Positions- und Lagewert zu erzeugen;
das Steuerungsmodul (42) und das Aktuationsmodul (42) dazu konfiguriert sind, den empfangenen Positions- und Lagewert in einem Modell elektrostatischer Kraft/Drehmoment höherer Ordnung der Testmasse (50) innerhalb des Steuerungssystems (10) zu verwenden, um die elektrostatische Kraft bzw. die Steuerspannung zu bestimmen, um die Testmasse (50) in die gewünschte Position und Lage der Testmasse (50) in Bezug auf das Elektrodengehäuse (12) zu bewegen,

wobei eine Inverse des Modells elektrostatischer Kraft/Drehmoment höherer Ordnung in dem Aktuationsmodul verwendet wird, um die entsprechenden Spannungen zu erhalten.

2. Steuerungssystem (10) nach Anspruch 1, ferner umfassend

eine Signalinjektionsvorrichtung (20);
wobei die Signalinjektionsvorrichtung (20) dazu konfiguriert ist, ein Signal an die Testmasse (50) anzulegen;
wobei die Aktuations- und Erfassungsanordnungen dazu konfiguriert sind, ein von der Testmasse ausgehendes Signal zu detektieren, basierend auf dem detektierten Signal ein Abstandssignal zu erzeugen und das Abstandssignal an die Steuerung (40) zu übertragen;
wobei die Steuerung (40) dazu konfiguriert ist, einen Abstand zwischen der Testmasse und den Aktuations- und Erfassungsanordnungen (22) auf jeder Seite des Hohlraums (13) basierend auf dem Abstandssignal zu bestimmen, um die Position und/oder Lage der Testmasse in Bezug auf das Elektrodengehäuse (12) zu bestimmen.

3. Steuerungssystem (10) nach Anspruch 2,
wobei die Signalinjektionsvorrichtung (20) mehrere Injektionselektroden umfasst, die an mindestens zwei Seiten des Hohlraums (13) angeordnet sind.

4. Steuerungssystem (10) nach einem der vorhergehenden Ansprüche,
wobei ein Kraft/Drehmoment-Paar entlang einer Raumachse und um eine Raumachse durch mindestens drei Aktuations- und Erfassungsanordnungen (22) ausgeübt wird.

5. Steuerungssystem (10) nach einem der vorhergehenden Ansprüche,
wobei das Steuerungsmodul (42) dazu konfiguriert ist, einen Steuerbefehl zu erzeugen, welcher bewirkt, dass die Aktuations- und Erfassungsanordnungen gleichzeitig eine Kraft auf die Testmasse (50) entlang mindestens einer Raumachse und ein Drehmoment um mindestens eine Raumachse ausüben.

6. Steuerungssystem (10) nach einem der vorhergehenden Ansprüche,
wobei die Steuerung (40) dazu konfiguriert ist, den Steuerbefehl zum Ansteuern der Aktuations- und Erfassungsanordnungen (22) mit einer Steuerspannung basierend auf einem Satz von Polynomen oder basierend auf einer Nachschlagetabelle zu erzeugen.

7. Steuerungssystem (10) nach einem der vorhergehenden Ansprüche,
wobei die Steuerung (40) dazu konfiguriert ist, Kapazitätswerte und Kapazitätsgradienten einer Kapazität zwischen den Aktuations- und Erfassungsanordnungen (22) und der Testmasse (50) zum Erzeugen des Steuerbefehls zum Ansteuern der Aktuations- und Erfassungsanordnungen mit einer Steuerspannung an der aktuellen Position und Lage der Testmasse (50) zu bestimmen.

8. Raumfahrzeug (1), umfassend:

ein Steuerungssystem (10) nach einem der Ansprüche 1 bis 7; und

eine Testmasse (50);

wobei sich die Testmasse (50) in dem Hohlraum (13) des Elektrodengehäuses (12) befindet, wobei der Arretiermechanismus (26) die Testmasse (50) in Position hält.

**9.** Verfahren zum Einfangen einer Testmasse (50) innerhalb eines Elektrodengehäuses (12) eines Raumfahrzeugs (1) mit mehreren Aktuations- und Erfassungsanordnungen (22), wobei das Verfahren die folgenden Schritte umfasst:

Bestimmen einer Position und Lage der Testmasse (50) in Bezug auf die Aktuations- und Erfassungsanordnungen (22);

Bestimmen einer erforderlichen elektrostatischen Kraft, die auf die Testmasse (50) auszuüben ist, basierend auf der Position und Lage der Testmasse (50) und unter Berücksichtigung einer gewünschten Position und Lage der Testmasse (50) in Bezug auf das Elektrodengehäuse (12);

Bestimmen, für jede Aktuations- und Erfassungsanordnung (22), eines Steuerbefehls zum Ansteuern der Aktuations- und Erfassungsanordnung (22) mit einer Steuerspannung zum Bewegen der Testmasse (50) in die gewünschte Position und Lage zwischen den Aktuations- und Erfassungsanordnungen (22);

wobei der Steuerbefehl zum Bewegen der Testmasse (50) mit der Steuerspannung in die gewünschte Position und Lage basierend auf der erforderlichen elektrostatischen Kraft und der bestimmten Position und Lage der Testmasse (50) zwischen den Aktuations- und Erfassungsanordnungen (22) bestimmt wird;

Anlegen der Steuerspannung an jede Aktuations- und Erfassungsanordnung (22);

wobei das Verfahren ferner umfasst

Verwenden der Position und Lage der Testmasse (50) in einem elektrostatischen Modell höherer Ordnung der Testmasse (50), um die elektrostatische Kraft und die Steuerspannung zu bestimmen, um die Testmasse (50) in die gewünschte Position und Lage der Testmasse (50) in Bezug auf das Elektrodengehäuse (12) zu bewegen, wobei eine Inverse des Modells elektrostatischer Kraft/Drehmoment höherer Ordnung verwendet wird, um die entsprechenden Spannungen zu erhalten.

**10.** Verfahren nach Anspruch 9, ferner umfassend:

Anlegen eines Signals an die Testmasse (50);

Detektieren eines von der Testmasse ausgehenden Signals;

Erzeugen eines Abstandssignals basierend auf dem detektierten Signal;

Bestimmen eines Abstands zwischen der Testmasse und den Aktuations- und Erfassungsanordnungen (22) auf jeder Seite des Hohlraums (13) basierend auf dem Abstandssignal, um die Position und/oder Lage der Testmasse in Bezug auf das Elektrodengehäuse (12) zu bestimmen.

**11.** Verfahren nach Anspruch 9 oder 10, ferner umfassend:

Ausüben eines Kraft/Drehmoment-Paars entlang einer Raumachse und um eine Raumachse durch mindestens drei Aktuations- und Erfassungsanordnungen (22).

**12.** Verfahren nach einem der Ansprüche 9 bis 11, ferner umfassend:

Erzeugen eines Steuerbefehls, welcher bewirkt, dass die Aktuations- und Erfassungsanordnungen gleichzeitig eine Kraft auf die Testmasse (50) entlang mindestens einer Raumachse und ein Drehmoment um mindestens eine Raumachse ausüben.

**13.** Verfahren nach einem der Ansprüche 9 bis 12, ferner umfassend:

dynamisches Aufteilen von auf die Testmasse ausgeübter Kraft und Drehmoment.

**14.** Verfahren nach einem der Ansprüche 9 bis 13, ferner umfassend:

Erzeugen des Steuerbefehls zum Ansteuern der Aktuations- und Erfassungsanordnungen (22) mit einer Steuerspannung basierend auf einem Satz von Polynomen oder basierend auf einer Nachschlagetabelle.

**Revendications**

**1.** Système de commande (10) pour la capture électrostatique et la commande d'une position et d'une attitude d'une masse d'essai (50) après libération en chute libre, le système de commande (10) comprenant:

un mécanisme de verrouillage (26) pour maintenir et libérer la masse d'essai (50);

plusieurs agencements d'actionnement et de détection (22);

un boîtier d'électrodes (12) présentant une cavité (13), la cavité (13) étant configurée pour recevoir la masse d'essai (50);

un contrôleur (40) qui est connecté électriquement à chacun des agencements d'actionnement et de détection (22);

dans lequel les agencements d'actionnement et de détection (22) sont montés sur le boîtier d'électrodes (12) de sorte qu'au moins un agencement d'actionnement et de détection (22) est disposé de chaque côté de la cavité (13);

dans lequel les agencements d'actionnement et de détection (22) sont configurés pour détecter une position et une attitude de la masse d'essai (50) dans la cavité (13) par rapport au boîtier d'électrodes (12);

dans lequel les agencements d'actionnement et de détection (22) sont configurés pour appliquer une force électrostatique à la masse d'essai (50) en réponse à laquelle la masse d'essai (50) modifie sa position et son attitude par rapport au boîtier d'électrodes (12);

dans lequel

le contrôleur (40) comprend un module de commande (42) et un module d'actionnement (44);

e contrôleur (40) est configuré pour recevoir une valeur de position et d'attitude de la masse d'essai (50) par rapport au boîtier d'électrodes (12);

le module de commande (42) est configuré pour déterminer la force électrostatique à appliquer à la masse d'essai (50) sur la base de la valeur de position et d'attitude reçue et en tenant compte d'une position et d'une attitude souhaitées de la masse d'essai par rapport au boîtier d'électrodes (12);

le module d'actionnement (44) est configuré pour générer une commande de pilotage pour commander les agencements d'actionnement et de détection (22) avec une tension de commande sur la base de la force électrostatique déterminée par le module de commande (42) et de la valeur de position et d'attitude reçue;

le module de commande (42) et le module d'actionnement (44) sont configurés pour utiliser la valeur de position et d'attitude reçue dans un modèle de force/couple électrostatique d'ordre supérieur de la masse d'essai (50) au sein du système de commande (10) pour déterminer respectivement la force électrostatique et la tension de commande, afin de déplacer la masse d'essai (50) vers la position et l'attitude souhaitées de la masse d'essai (50) par rapport au boîtier d'électrodes (12),

dans lequel une fonction inverse du modèle de force/couple électrostatique d'ordre supérieur étant utilisée dans le module d'actionnement pour obtenir les tensions correspondantes.

2.  Système de commande (10) selon la revendication 1, comprenant en outre

un dispositif d'injection de signal (20);

dans lequel le dispositif d'injection de signal (20) est configuré pour appliquer un signal à la masse d'essai (50);

dans lequel les agencements d'actionnement et de détection sont configurés pour détecter un signal émanant de la masse d'essai, générer un signal de distance sur la base du signal détecté, et transmettre le signal de distance au contrôleur (40);

dans lequel le contrôleur (40) est configuré pour déterminer une distance entre la masse d'essai et les agencements d'actionnement et de détection (22) de chaque côté de la cavité (13) sur la base du signal de distance afin de déterminer la position et/ou l'attitude de la masse d'essai par rapport au boîtier d'électrodes (12).

3.  Système de commande (10) selon la revendication 2, dans lequel le dispositif d'injection de signal (20) comprend plusieurs électrodes d'injection qui sont disposées sur au moins deux côtés de la cavité (13).

4.  Système de commande (10) selon l'une quelconque des revendications précédentes, dans lequel une paire force/couple le long d'un axe spatial et autour d'un axe spatial est appliquée par au plus trois agencements d'actionnement et de détection (22).

5.  Système de commande (10) selon l'une quelconque des revendications précédentes, dans lequel le module de commande (42) est configuré pour générer une commande de pilotage qui amène les agencements d'actionnement et de détection à exercer simultanément une force sur la masse d'essai (50) le long d'au moins un axe spatial et un couple autour d'au moins un axe spatial.

6.  Système de commande (10) selon l'une quelconque des revendications précédentes,

dans lequel le contrôleur (40) est configuré pour générer la commande de pilotage pour commander les agencements d'actionnement et de détection (22) avec une tension de commande sur la base d'un ensemble de polynômes ou sur la base d'une table de correspondance.

7. Système de commande (10) selon l'une quelconque des revendications précédentes,
dans lequel le contrôleur (40) est configuré pour déterminer des valeurs de capacité et des gradients de capacité d'une capacité entre les agencements d'actionnement et de détection (22) et la masse d'essai (50) pour générer la commande de pilotage pour commander les agencements d'actionnement et de détection avec une tension de commande à la position et à l'attitude actuelles de la masse d'essai (50).

8. Véhicule spatial (1), comprenant:

un système de commande (10) selon l'une quelconque des revendications 1 à 7; et
une masse d'essai (50);
dans lequel la masse d'essai (50) est située dans la cavité (13) du boîtier d'électrodes (12), le mécanisme de verrouillage (26) maintenant la masse d'essai (50) en position.

9. Procédé pour capturer une masse d'essai (50) à l'intérieur d'un boîtier d'électrodes (12) d'un véhicule spatial (1) avec plusieurs agencements d'actionnement et de détection (22), le procédé comprenant les étapes consistant à:

déterminer une position et une attitude de la masse d'essai (50) par rapport aux agencements d'actionnement et de détection (22);
déterminer une force électrostatique requise à appliquer à la masse d'essai (50) sur la base de la position et de l'attitude de la masse d'essai (50) et en tenant compte d'une position et d'une attitude souhaitées de la masse d'essai (50) par rapport au boîtier d'électrodes (12);
déterminer, pour chaque agencement d'actionnement et de détection (22), une commande de pilotage pour commander l'agencement d'actionnement et de détection (22) avec une tension de commande pour déplacer la masse d'essai (50) vers la position et l'attitude souhaitées entre les agencements d'actionnement et de détection (22);
dans lequel la commande de pilotage pour déplacer la masse d'essai (50) avec la tension de commande vers la position et l'attitude souhaitées est déterminée sur la base de la force électrostatique requise et de la position et de l'attitude déterminées de la masse d'essai (50) entre les agencements d'actionnement et de détection (22);
appliquer la tension de commande à chaque agencement d'actionnement et de détection (22);
le procédé comprenant en outre l'étape consistant à
utiliser la position et l'attitude de la masse d'essai (50) dans un modèle électrostatique d'ordre supérieur de la masse d'essai (50) pour déterminer la force électrostatique et la tension de commande afin de déplacer la masse d'essai (50) vers la position et l'attitude souhaitées de la masse d'essai (50) par rapport au boîtier d'électrodes (12), une fonction inverse du modèle de force/couple électrostatique d'ordre supérieur étant utilisée pour obtenir les tensions correspondantes.

10. Procédé selon la revendication 9, comprenant en outre les étapes consistant à:

appliquer un signal à la masse d'essai (50);
détecter un signal émanant de la masse d'essai;
générer un signal de distance sur la base du signal détecté;
déterminer une distance entre la masse d'essai et les agencements d'actionnement et de détection (22) de chaque côté de la cavité (13) sur la base du signal de distance afin de déterminer la position et/ou l'attitude de la masse d'essai par rapport au boîtier d'électrodes (12).

11. Procédé selon la revendication 9 ou 10, comprenant en outre l'étape consistant à:
appliquer une paire force/couple le long d'un axe spatial et autour d'un axe spatial par au moins trois agencements d'actionnement et de détection (22).

12. Procédé selon l'une quelconque des revendications 9 à 11, comprenant en outre l'étape consistant à :
générer une commande de pilotage qui amène les agencements d'actionnement et de détection à exercer simultanément une force sur la masse d'essai (50) le long d'au moins un axe spatial et un couple autour d'au moins un axe spatial.

**13.** Procédé selon l'une quelconque des revendications 9 à 12, comprenant en outre l'étape consistant à:
répartir dynamiquement la force et le couple appliqués à la masse d'essai.

**14.** Procédé selon l'une quelconque des revendications 9 à 13, comprenant en outre l'étape consistant à:
générer la commande de pilotage pour commander les agencements d'actionnement et de détection (22) avec une tension de commande sur la base d'un ensemble de polynômes ou sur la base d'une table de correspondance.

Fig. 1

Fig. 2

Fig. 3

Fig. 4

Fig. 5

Fig. 6

Fig. 7

Fig. 8

Fig. 9

Fig. 10

**REFERENCES CITED IN THE DESCRIPTION**

**Non-patent literature cited in the description**

- LISA technology and instrumentation. **JENNRICH, O**. Classical and Quantum Gravity. Institute of Physic Publishing, 07 August 2009, vol. 26, 153001
- **DORNIER SATELLITENSYSTEME GMBH et al.** *LISA Study of the Laser Interferometer Space Antenna - Final Technical Report*, 01 April 2000, 1-504
- **MONTEMURRO FABIO et al.** Sliding Mode Technique applied to Test Mass Suspension Control. *5th IFAC Symposium on Modelling and Control in Biomedical Systems 2003*, 21 August 2003, vol. 40, ISSN 1474-6670, 627-632
- **WANG YUKUN et al.** Adaptive preload controller design and analysis for electrostatic suspension system. *International Journal of Modern Physics A*, 27 February 2021, vol. 36 (11,12), ISSN 0217-751X, 1-14